# EUROPEAN PATENT APPLICATION

(11) **EP 4 456 603 A1**
(43) Date of publication of application: **30.10.2024**
(21) Application number: 23746021.7
(22) Date of filing: 13.01.2023
(51) Int. Cl.: H04W 36/00

(54) **METHOD AND APPARATUS FOR CELL MOBILITY MANAGEMENT**

(30) Priority: 30.01.2022 CN 202210114245
(71) Applicant: Huawei Technologies Co., Ltd., Shenzhen, Guangdong 518129 (CN)
(72) Inventor: WANG, Yu, Shenzhen, Guangdong 518129 (CN); QIAO, Yunfei, Shenzhen, Guangdong 518129 (CN); DU, Yinggang, Shenzhen, Guangdong 518129 (CN); ZHANG, Jingwei, Shenzhen, Guangdong 518129 (CN)
(74) Representative: Pfenning, Meinig & Partner mbB
(86) International application number: PCT/CN2023/072135
(87) International publication number: WO 2023/143139

(57) **Abstract**

This application provides a cell mobility management method, and an apparatus. The method includes: A terminal device obtains first information. The first information includes a threshold set and position information of a cell reference point. The threshold set includes at least one threshold. The terminal device determines, based on the first information, whether the threshold set and a distance between the terminal device and the cell reference point satisfy a first event for the cell mobility management. The method and apparatus provided in this application can improve a success rate of the cell mobility management.

## Description

This application claims priority to Chinese Patent Application No. 202210114245.1, filed with the China National Intellectual Property Administration on January 30, 2022 and entitled "CELL MOBILITY MANAGEMENT METHOD, AND APPARATUS", which is incorporated herein by reference in its entirety.

### TECHNICAL FIELD

This application relates to the communication field, and more specifically, to a cell mobility management method, and an apparatus.

### BACKGROUND

A non-terrestrial network (non-terrestrial network, NTN) includes nodes such as a satellite network, a high altitude platform, and an uncrewed aerial vehicle. The non-terrestrial network and a 5th generation (5th generation, 5G) system jointly form a sea-land-space-air-ground integrated communication network with seamless global coverage, to meet various service requirements.

Mobility management (for example, handover or reselection) of a new radio (new radio, NR) cell in the 5G system is mainly based on a signal quality measurement mechanism. In an NTN scenario, a signal quality difference between a cell center and a cell edge in an NTN is not explicit. As a result, efficiency of cell handover or reselection triggered based on signal quality is low. How to perform mobility management of a cell is a problem that needs to be considered currently.

### SUMMARY

This application provides a cell mobility management method, and an apparatus, to improve a success rate of the cell mobility management.

According to a first aspect, a cell mobility management method is provided. The method may be performed by a terminal device, or may be performed by a component (such as a chip or a chip system) configured in the terminal device. This is not limited in this application. The method includes: The terminal device obtains first information. The first information includes a threshold set and position information of a cell reference point. The threshold set includes at least two thresholds. The terminal device determines, based on the first information, whether the threshold set and a distance between the terminal device and the cell reference point satisfy a first event. The first event is for cell mobility management of the terminal device.

Based on the foregoing solution, the terminal device may assist in a mobility management process of a cell by using the position information, to avoid a problem of low efficiency caused by the cell mobility management triggered by signal quality. In addition, the terminal device may refer to the at least two thresholds in the mobility management process of the cell, in other words, consider thresholds of the terminal device and the cell reference point in different directions. This solution may be applicable to a scenario in which cells are deployed in an irregular polygon or non-circular shape, thereby improving a success rate of the cell mobility management.

With reference to the first aspect, in some implementations of the first aspect, the cell reference point includes at least one of the following: a serving cell reference point and a target cell reference point. The terminal device obtains the first event. The first event includes at least one of the following: a distance between the terminal device and the serving cell reference point is greater than at least one threshold in the threshold set, or a distance between the terminal device and the target cell reference point is less than at least one threshold in the threshold set.

Based on the foregoing solution, the terminal device may determine whether a distance between the terminal device and a serving cell and/or a distance between the terminal device and a target cell satisfy/satisfies the first event, to perform cell handover or reselection. In the determining process, the at least two thresholds may be referred to, so that a success rate of the cell handover or reselection can be improved.

With reference to the first aspect, in some implementations of the first aspect, the threshold set includes at least one of the following: a longitude threshold and a latitude threshold, thresholds corresponding to an x-axis, a y-axis, and a z-axis in an earth-centered, earth-fixed coordinate system, thresholds corresponding to an x-axis, a y-axis, and a z-axis in an earth-centered-inertial coordinate system, and at least two of a first angle, a second angle, and a third angle.

The first angle is an angle between a connection line between a network device and the cell reference point and a first direction on a first plane. The first plane may be a plane perpendicular to a connection line between the network device and an earth center. The second angle may be an angle between the connection line between the network device and the cell reference point and a second direction on the first plane. The first direction is perpendicular to the second direction. The third angle may be a maximum off-axis angle.

The foregoing solution includes a plurality of representation forms of thresholds in the threshold set, which helps the terminal device determine, based on position information of different types of cell reference points, whether the first event is satisfied. For example, the position information that is of the cell reference point and that is obtained by the terminal device includes longitude and latitude. In this case, if the threshold in the threshold set is also in a form of longitude and latitude, the terminal device may be prevented from converting the position information or the threshold (if the threshold in the threshold set is not in the form of longitude and latitude, the terminal device needs to perform conversion, for example, converts the threshold in the threshold set into the form of longitude and latitude, or converts the position information of the cell reference point into the representation form of the threshold).

With reference to the first aspect, in some implementations of the first aspect, the terminal device obtains first position assistance information. The first position assistance information includes position offsets of one or more cell reference points relative to the network device, and threshold set information. The terminal device obtains ephemeris information. The terminal device determines the first information based on the first position assistance information and the ephemeris information.

Based on the foregoing solution, because the position offset of the cell reference point relative to the network device generally does not change (that is, may not be periodically updated), in comparison with a solution in which the terminal device directly obtains the first information from the network device, the solution (where the position information in the first information indicates an absolute position, and if the network device is a satellite network device and periodically moves, the position information changes in real time) in which the terminal device determines the first information with reference to the first position assistance information and the ephemeris information can reduce signaling overheads of updating the first position assistance information.

With reference to the first aspect, in some implementations of the first aspect, the first position assistance information includes the position offsets of the plurality of cell reference points relative to the network device. The position offsets include position offsets that are of a plurality of cell reference points on the first plane and that are relative to the network device. The first plane includes a plane perpendicular to the connection line between the network device and the earth center.

The foregoing solution may be applied to a beam hopping communication system. In the beam hopping communication system, beams serving the terminal device at different moments may be different. If the cell uses the beam as a granularity, cells serving the terminal device at different moments are different, in other words, position information of the serving cell reference point changes at different moments. Therefore, the network device may deliver, to the terminal device, all position offsets of cell reference points, relative to the network device, that provide services at different moments for the network device. Subsequently, the terminal device may determine actual positions of the plurality of cell reference points based on the relative position offsets of the plurality of the cell reference points.

With reference to the first aspect, in some implementations of the first aspect, the first position assistance information further includes at least one of the following: a start point of the first plane, an angle between the first direction on the first plane and the connection line (the connection line between the network device and the earth center), an angle between the second direction on the first plane and the connection line, and the maximum off-axis angle. The first direction is perpendicular to the second direction.

Based on the foregoing solution, in comparison with a process in which the network device delivers different cell reference point positions at a plurality of time points, a process in which the network device simultaneously delivers the plurality of cell reference points can reduce the signaling overheads.

With reference to the first aspect, in some implementations of the first aspect, the first position assistance information further includes status information of at least one of the position offset and the threshold set information. The status information is used by the terminal device to determine whether the at least one of the position offset and the threshold set information is active.

Based on the foregoing solution, the terminal device may learn whether the position offset of the cell reference point or the threshold set information is active, so that whether to determine, with reference to the position offset or the threshold set information, whether the first event is satisfied can be determined.

With reference to the first aspect, in some implementations of the first aspect, the first position assistance information further includes validity time of the status information.

Based on the foregoing solution, the terminal device may learn of a validity period of the position offset of the cell reference point relative to the network device or the threshold set information. It is assumed that the status information of the position offset of the cell reference point relative to the network device is active, and the validity time of the activation is T. In this case, the position offset of the cell reference point relative to the network device does not need to be updated within the period T.

With reference to the first aspect, in some implementations of the first aspect, the terminal device obtains a first SIB message. The first SIB message includes the first position assistance information and a first value tag. When values of the first value tag and a second value tag are different, the terminal device obtains an updated first SIB message. The updated first SIB message includes second position assistance information. The second value tag is a value tag included in the first SIB message before the first SIB message is updated.

Based on the foregoing solution, the terminal device obtains the updated first SIB message when a value of a value tag changes, to avoid frequently reading the first SIB message, to reduce energy consumption of the terminal device.

With reference to the first aspect, in some implementations of the first aspect, the first SIB message further includes a version number of the first SIB message. The terminal device obtains a correspondence between the version number of the first SIB message and position assistance information. The correspondence between the version number of the first SIB message and the position assistance information is used to determine the first information.

With reference to the first aspect, in some implementations of the first aspect, the terminal device obtains a second SIB message. The second SIB message includes the ephemeris information and a version number of the second SIB message. There is a correspondence between the ephemeris information and the version number of the second SIB message. The correspondence between the ephemeris information and the version number of the second SIB message is used to determine the first information.

Based on the foregoing solution, when the network device periodically moves, the terminal device may obtain the ephemeris information of the network device at different moments based on the correspondence between the ephemeris information and the version number of the second SIB message, to further determine a position of the cell reference point. This solution can reduce frequency of updating a system message, and reduce signaling overheads of updating the ephemeris information.

According to a second aspect, a cell mobility management method is provided. The method may be performed by a network device, or may be performed by a component (such as a chip or a chip system) configured in a network device. This is not limited in this application. The method includes: The network device sends first information. The first information includes a threshold set and position information of a cell reference point. The threshold set includes at least two thresholds. The first information is used to determine whether the threshold set and a distance between a terminal device and the cell reference point satisfy a first event. The first event is for cell mobility management of the terminal device.

Based on the foregoing solution, the terminal device may assist in a mobility management process of a cell by using the position information, to avoid a problem of low efficiency caused by the cell mobility management triggered by signal quality. In addition, the terminal device may refer to the at least two thresholds in the mobility management process of the cell, in other words, consider thresholds of the terminal device and the cell reference point in different directions. This solution may be applicable to a scenario in which cells are deployed in an irregular polygon or non-circular shape, thereby improving a success rate of the cell mobility management.

With reference to the second aspect, in some implementations of the second aspect, the cell reference point includes at least one of the following: a serving cell reference point and a target cell reference point. The network device sends the first event. The first event includes at least one of the following: a distance between the terminal device and the serving cell reference point is greater than at least one threshold in the threshold set, or a distance between the terminal device and the target cell reference point is less than at least one threshold in the threshold set.

Based on the foregoing solution, the terminal device may determine, based on the first event delivered by the network device, whether cell handover or reselection can be performed. In the determining process, the at least two thresholds may be referred to, so that a success rate of the cell handover or reselection can be improved.

With reference to the second aspect, in some implementations of the second aspect, the threshold set includes at least one of the following: a longitude threshold and a latitude threshold, thresholds corresponding to an x-axis, a y-axis, and a z-axis in an earth-centered, earth-fixed coordinate system, thresholds corresponding to an x-axis, a y-axis, and a z-axis in an earth-centered-inertial coordinate system, and at least two of a first angle, a second angle, and a third angle.

The first angle is an angle between a connection line between the network device and the cell reference point and a first direction on a first plane. The first plane may be a plane perpendicular to a connection line between the network device and an earth center. The second angle may be an angle between the connection line between the network device and the cell reference point and a second direction on the first plane. The first direction is perpendicular to the second direction. The third angle may be a maximum off-axis angle.

The foregoing solution includes a plurality of representation forms of thresholds in the threshold set, which helps the terminal device determine, based on position information of different types of cell reference points, whether the first event is satisfied. For example, the position information that is of the cell reference point and that is obtained by the terminal device includes longitude and latitude. In this case, if the threshold in the threshold set is also in a form of longitude and latitude, the terminal device may be prevented from converting the position information or the threshold (if the threshold in the threshold set is not in the form of longitude and latitude, the terminal device needs to perform conversion, for example, converts the threshold in the threshold set into the form of longitude and latitude, or converts the position information of the cell reference point into the representation form of the threshold).

With reference to the second aspect, in some implementations of the second aspect, the network device sends first position assistance information. The first position assistance information includes a position offset of the cell reference point relative to the network device, and threshold set information. The network device sends ephemeris information. The ephemeris information and the first position assistance information are used to determine the first information.

Based on the foregoing solution, because the position offset of the cell reference point relative to the network device generally does not change (that is, may not be periodically updated), in comparison with a solution in which the terminal device directly obtains the first information from the network device, the solution (where the position information in the first information indicates an absolute position, and if the network device is a satellite network device and periodically moves, the position information changes in real time) in which the terminal device determines the first information with reference to the first position assistance information and the ephemeris information can reduce signaling overheads of updating the first position assistance information.

With reference to the second aspect, in some implementations of the second aspect, the first position assistance information includes position offsets of a plurality of cell reference points relative to the network device. The position offsets include position offsets that are of a plurality of cell reference points on the first plane and that are relative to the network device. The first plane includes a plane perpendicular to the connection line between the network device and the earth center.

The foregoing solution may be applied to a beam hopping communication system. In the beam hopping communication system, beams serving the terminal device at different moments may be different. If the cell uses the beam as a granularity, cells serving the terminal device at different moments are different, in other words, position information of the serving cell reference point changes at different moments. Therefore, the network device may deliver, to the terminal device, all position offsets of cell reference points, relative to the network device, that provide services at different moments for the network device. Subsequently, the terminal device may determine actual positions of the plurality of cell reference points based on the relative position offsets of the plurality of the cell reference points.

With reference to the second aspect, in some implementations of the second aspect, the first position assistance information further includes at least one of the following: a start point of the first plane, an angle between the first direction on the first plane and the connection line (the connection line between the network device and the earth center), an angle between the second direction on the first plane and the connection line, and the maximum off-axis angle. The first direction is perpendicular to the second direction.

Based on the foregoing solution, in comparison with a process in which the network device delivers different cell reference point positions at a plurality of time points, a process in which the network device simultaneously delivers the plurality of cell reference points can reduce the signaling overheads.

With reference to the second aspect, in some implementations of the second aspect, the first position assistance information further includes status information of at least one of the position offset and the threshold set information. The status information is used by the terminal device to determine whether the at least one of the position offset and the threshold set information is active.

Based on the foregoing solution, the terminal device may learn whether the position offset of the cell reference point or the threshold set information is active, so that whether to determine, with reference to the position offset or the threshold set information, whether the first event is satisfied can be determined.

With reference to the second aspect, in some implementations of the second aspect, the first position assistance information further includes validity time of the status information.

Based on the foregoing solution, the terminal device may learn of a validity period of the position offset of the cell reference point relative to the network device or the threshold set information. It is assumed that the status information of the position offset of the cell reference point relative to the network device is active, and the validity time of the activation is T. In this case, the position offset of the cell reference point relative to the network device does not need to be updated within the period T.

With reference to the second aspect, in some implementations of the second aspect, the network device sends a first SIB message. The first SIB message includes the first position assistance information. When the first position assistance information changes, the network device sends an updated first SIB message. The updated first SIB message includes second position assistance information.

Based on the foregoing solution, the network device sends the updated first SIB message when the first position assistance information changes, to avoid frequent update of position assistance information, to reduce the signaling overheads.

With reference to the second aspect, in some implementations of the second aspect, the first SIB message further includes a version number of the first SIB message. There is a correspondence between the version number of the first SIB message and the position assistance information. The correspondence between the version number of the first SIB message and the position assistance information is used to determine the first information.

With reference to the second aspect, in some implementations of the second aspect, the network device sends a second SIB message. The second SIB message includes the ephemeris information and a version number of the second SIB message. There is a correspondence between the ephemeris information and the version number of the second SIB message. The correspondence between the ephemeris information and the version number of the second SIB message is used to determine the first information.

Based on the foregoing solution, when the network device periodically moves, the terminal device may obtain the ephemeris information of the network device at different moments based on the correspondence between the ephemeris information and the version number of the second SIB message, to further determine a position of the cell reference point. This solution can reduce frequency of updating a system message, and reduce signaling overheads of updating the ephemeris information.

According to a third aspect, a communication apparatus is provided. The apparatus may be a terminal device, or may be a component (such as a chip or a chip system) configured in a terminal device. This is not limited in this application. The apparatus includes a processing unit. A transceiver unit is configured to obtain first information. The first information includes a threshold set and position information of a cell reference point. The threshold set includes at least two thresholds. The processing unit is configured to determine, based on the first information, whether the threshold set and a distance between the terminal device and the cell reference point satisfy a first event. The first event is for cell mobility management of the terminal device.

Based on the foregoing solution, the terminal device may assist in a mobility management process of a cell by using the position information, to avoid a problem of low efficiency caused by the cell mobility management triggered by signal quality. In addition, the terminal device may refer to the at least two thresholds in the mobility management process of the cell, in other words, consider thresholds of the terminal device and the cell reference point in different directions. This solution may be applicable to a scenario in which cells are deployed in an irregular polygon or non-circular shape, thereby improving a success rate of the cell mobility management.

With reference to the third aspect, in some implementations of the third aspect, the cell reference point includes at least one of the following: a serving cell reference point and a target cell reference point. The transceiver unit is further configured to obtain the first event. The first event includes at least one of the following: a distance between the terminal device and the serving cell reference point is greater than at least one threshold in the threshold set, or a distance between the terminal device and the target cell reference point is less than at least one threshold in the threshold set.

Based on the foregoing solution, the terminal device may determine whether a distance between the terminal device and a serving cell and/or a distance between the terminal device and a target cell satisfy/satisfies the first event, to perform cell handover or reselection. In the determining process, the at least two thresholds may be referred to, so that a success rate of the cell handover or reselection can be improved.

With reference to the third aspect, in some implementations of the third aspect, the threshold set includes at least one of the following: a longitude threshold and a latitude threshold, thresholds corresponding to an x-axis, a y-axis, and a z-axis in an earth-centered, earth-fixed coordinate system, thresholds corresponding to an x-axis, a y-axis, and a z-axis in an earth-centered-inertial coordinate system, and at least two of a first angle, a second angle, and a third angle.

The foregoing solution includes a plurality of representation forms of thresholds in the threshold set, which helps the terminal device determine, based on position information of different types of cell reference points, whether the first event is satisfied. For example, the position information that is of the cell reference point and that is obtained by the terminal device includes longitude and latitude. In this case, if the threshold in the threshold set is also in a form of longitude and latitude, the terminal device may be prevented from converting the position information or the threshold (if the threshold in the threshold set is not in the form of longitude and latitude, the terminal device needs to perform conversion, for example, converts the threshold in the threshold set into the form of longitude and latitude, or converts the position information of the cell reference point into the representation form of the threshold).

With reference to the third aspect, in some implementations of the third aspect, that the transceiver unit is configured to obtain first information includes: The transceiver unit is configured to obtain first position assistance information. The first position assistance information includes position offsets of one or more cell reference points relative to a network device, and threshold set information. The transceiver unit is further configured to obtain ephemeris information. The processing unit is further configured to determine the first information based on the first position assistance information and the ephemeris information.

Based on the foregoing solution, because the position offset of the cell reference point relative to the network device generally does not change (that is, may not be periodically updated), in comparison with a solution in which the terminal device directly obtains the first information from the network device, the solution (where the position information in the first information indicates an absolute position, and if the network device is a satellite network device and periodically moves, the position information changes in real time) in which the terminal device determines the first information with reference to the first position assistance information and the ephemeris information can reduce signaling overheads of updating the first position assistance information.

With reference to the third aspect, in some implementations of the third aspect, the first position assistance information includes the position offsets of the plurality of cell reference points relative to the network device. The position offsets include position offsets that are of a plurality of cell reference points on a first plane and that are relative to the network device. The first plane includes a plane perpendicular to a connection line between the network device and an earth center.

The foregoing solution may be applied to a beam hopping communication system. In the beam hopping communication system, beams serving the terminal device at different moments may be different. If the cell uses the beam as a granularity, cells serving the terminal device at different moments are different, in other words, position information of the serving cell reference point changes at different moments. Therefore, the network device may deliver, to the terminal device, all position offsets of cell reference points, relative to the network device, that provide services at different moments for the network device. Subsequently, the terminal device may determine actual positions of the plurality of cell reference points based on the relative position offsets of the plurality of the cell reference points.

With reference to the third aspect, in some implementations of the third aspect, the first position assistance information further includes at least one of the following: a start point of the first plane, an angle between a first direction on the first plane and the connection line (the connection line between the network device and the earth center), an angle between a second direction on the first plane and the connection line, and a maximum off-axis angle. The first direction is perpendicular to the second direction.

Based on the foregoing solution, in comparison with a process in which the network device delivers different cell reference point positions at a plurality of time points, a process in which the network device simultaneously delivers the plurality of cell reference points can reduce the signaling overheads.

With reference to the third aspect, in some implementations of the third aspect, the first position assistance information further includes status information of at least one of the position offset and the threshold set information. The status information is used by the terminal device to determine whether the at least one of the position offset and the threshold set information is active.

Based on the foregoing solution, the terminal device may learn whether the position offset of the cell reference point or the threshold set information is active, so that whether to determine, with reference to the position offset or the threshold set information, whether the first event is satisfied can be determined.

With reference to the third aspect, in some implementations of the third aspect, the first position assistance information further includes validity time of the status information.

Based on the foregoing solution, the terminal device may learn of a validity period of the position offset of the cell reference point relative to the network device or the threshold set information. It is assumed that the status information of the position offset of the cell reference point relative to the network device is active, and the validity time of the activation is T. In this case, the position offset of the cell reference point relative to the network device does not need to be updated within the period T.

With reference to the third aspect, in some implementations of the third aspect, the transceiver unit is further configured to obtain a first SIB message. The first SIB message includes the first position assistance information and a first value tag. When values of the first value tag and a second value tag are different, the transceiver unit is further configured to obtain an updated first SIB message. The updated first SIB message includes second position assistance information. The second value tag is a value tag included in the first SIB message before the first SIB message is updated.

Based on the foregoing solution, the terminal device obtains the updated first SIB message when a value of a value tag changes, to avoid frequently reading the first SIB message, to reduce energy consumption of the terminal device.

With reference to the third aspect, in some implementations of the third aspect, the first SIB message further includes a version number of the first SIB message. The processing unit is further configured to obtain a correspondence between the version number of the first SIB message and position assistance information. The correspondence between the version number of the first SIB message and the position assistance information is used to determine the first information.

With reference to the third aspect, in some implementations of the third aspect, the transceiver unit is further configured to obtain a second SIB message. The second SIB message includes the ephemeris information and a version number of the second SIB message. There is a correspondence between the ephemeris information and the version number of the second SIB message. The correspondence between the ephemeris information and the version number of the second SIB message is used to determine the first information.

Based on the foregoing solution, when the network device periodically moves, the terminal device may obtain the ephemeris information of the network device at different moments based on the correspondence between the ephemeris information and the version number of the second SIB message, to further determine a position of the cell reference point. This solution can reduce frequency of updating a system message, and reduce signaling overheads of updating the ephemeris information.

According to a fourth aspect, a communication apparatus is provided. The apparatus may be a network device, or may be a component (such as a chip or a chip system) configured in a network device. This is not limited in this application. The apparatus includes a transceiver unit. The transceiver unit is configured to send first information. The first information includes a threshold set and position information of a cell reference point. The threshold set includes at least two thresholds. The first information is used to determine whether the threshold set and a distance between a terminal device and the cell reference point satisfy a first event. The first event is for cell mobility management of the terminal device.

Based on the foregoing solution, the terminal device may assist in a mobility management process of a cell by using the position information, to avoid a problem of low efficiency caused by the cell mobility management triggered by signal quality. In addition, the terminal device may refer to the at least two thresholds in the mobility management process of the cell, in other words, consider thresholds of the terminal device and the cell reference point in different directions. This solution may be applicable to a scenario in which cells are deployed in an irregular polygon or non-circular shape, thereby improving a success rate of the cell mobility management.

With reference to the fourth aspect, in some implementations of the fourth aspect, the cell reference point includes at least one of the following: a serving cell reference point and a target cell reference point. The transceiver unit is further configured to send the first event. The first event includes at least one of the following: a distance between the terminal device and the serving cell reference point is greater than at least one threshold in the threshold set, or a distance between the terminal device and the target cell reference point is less than at least one threshold in the threshold set.

Based on the foregoing solution, the terminal device may determine, based on the first event delivered by the network device, whether cell handover or reselection can be performed. In the determining process, the at least two thresholds may be referred to, so that a success rate of the cell handover or reselection can be improved.

With reference to the fourth aspect, in some implementations of the fourth aspect, the threshold set includes at least one of the following: a longitude threshold and a latitude threshold, thresholds corresponding to an x-axis, a y-axis, and a z-axis in an earth-centered, earth-fixed coordinate system, thresholds corresponding to an x-axis, a y-axis, and a z-axis in an earth-centered-inertial coordinate system, and at least two of a first angle, a second angle, and a third angle.

The foregoing solution includes a plurality of representation forms of thresholds in the threshold set, which helps the terminal device determine, based on position information of different types of cell reference points, whether the first event is satisfied. For example, the position information that is of the cell reference point and that is obtained by the terminal device includes longitude and latitude. In this case, if the threshold in the threshold set is also in a form of longitude and latitude, the terminal device may be prevented from converting the position information or the threshold (if the threshold in the threshold set is not in the form of longitude and latitude, the terminal device needs to perform conversion, for example, converts the threshold in the threshold set into the form of longitude and latitude, or converts the position information of the cell reference point into the representation form of the threshold).

With reference to the fourth aspect, in some implementations of the fourth aspect, that the transceiver unit is configured to send first information includes: The transceiver unit is configured to send first position assistance information. The first position assistance information includes a position offset of the cell reference point relative to the network device, and threshold set information. The network device sends ephemeris information. The ephemeris information and the first position assistance information are used to determine the first information.

Based on the foregoing solution, because the position offset of the cell reference point relative to the network device generally does not change (that is, may not be periodically updated), in comparison with a solution in which the terminal device directly obtains the first information from the network device, the solution (where the position information in the first information indicates an absolute position, and if the network device is a satellite network device and periodically moves, the position information changes in real time) in which the terminal device determines the first information with reference to the first position assistance information and the ephemeris information can reduce signaling overheads of updating the first position assistance information.

With reference to the fourth aspect, in some implementations of the fourth aspect, the first position assistance information includes position offsets of a plurality of cell reference points relative to the network device. The position offsets include position offsets that are of a plurality of cell reference points on a first plane and that are relative to the network device. The first plane includes a plane perpendicular to a connection line between the network device and an earth center.

The foregoing solution may be applied to a beam hopping communication system. In the beam hopping communication system, beams serving the terminal device at different moments may be different. If the cell uses the beam as a granularity, cells serving the terminal device at different moments are different, in other words, position information of the serving cell reference point changes at different moments. Therefore, the network device may deliver, to the terminal device, all position offsets of cell reference points, relative to the network device, that provide services at different moments for the network device. Subsequently, the terminal device may determine actual positions of the plurality of cell reference points based on the relative position offsets of the plurality of the cell reference points.

With reference to the fourth aspect, in some implementations of the fourth aspect, the first position assistance information further includes at least one of the following: a start point of the first plane, an angle between a first direction on the first plane and the connection line (the connection line between the network device and the earth center), an angle between a second direction on the first plane and the connection line, and a maximum off-axis angle. The first direction is perpendicular to the second direction.

Based on the foregoing solution, in comparison with a process in which the network device delivers different cell reference point positions at a plurality of time points, a process in which the network device simultaneously delivers the plurality of cell reference points can reduce the signaling overheads.

With reference to the fourth aspect, in some implementations of the fourth aspect, the first position assistance information further includes status information of at least one of the position offset and the threshold set information. The status information is used by the terminal device to determine whether the at least one of the position offset and the threshold set information is active.

Based on the foregoing solution, the terminal device may learn whether the position offset of the cell reference point or the threshold set information is active, so that whether to determine, with reference to the position offset or the threshold set information, whether the first event is satisfied can be determined.

With reference to the fourth aspect, in some implementations of the fourth aspect, the first position assistance information further includes validity time of the status information.

Based on the foregoing solution, the terminal device may learn of a validity period of the position offset of the cell reference point relative to the network device or the threshold set information. It is assumed that the status information of the position offset of the cell reference point relative to the network device is active, and the validity time of the activation is T. In this case, the position offset of the cell reference point relative to the network device does not need to be updated within the period T.

With reference to the fourth aspect, in some implementations of the fourth aspect, the transceiver unit is further configured to send a first SIB message. The first SIB message includes the first position assistance information. When the first position assistance information changes, the transceiver unit is further configured to send an updated first SIB message. The updated first SIB message includes second position assistance information.

Based on the foregoing solution, the network device sends the updated first SIB message when the first position assistance information changes, to avoid frequent update of position assistance information, to reduce the signaling overheads.

With reference to the fourth aspect, in some implementations of the fourth aspect, the first SIB message further includes a version number of the first SIB message. There is a correspondence between the version number of the first SIB message and the position assistance information. The correspondence between the version number of the first SIB message and the position assistance information is used to determine the first information.

With reference to the fourth aspect, in some implementations of the fourth aspect, the transceiver unit is further configured to send a second SIB message. The second SIB message includes the ephemeris information and a version number of the second SIB message. There is a correspondence between the ephemeris information and the version number of the second SIB message. The correspondence between the ephemeris information and the version number of the second SIB message is used to determine the first information.

Based on the foregoing solution, when the network device periodically moves, the terminal device may obtain the ephemeris information of the network device at different moments based on the correspondence between the ephemeris information and the version number of the second SIB message, to further determine a position of the cell reference point. This solution can reduce frequency of updating a system message, and reduce signaling overheads of updating the ephemeris information.

According to a fifth aspect, a communication apparatus is provided. The apparatus includes a processor. The processor is coupled to a memory, and may be configured to execute instructions in the memory, to implement the method according to any one of the first aspect or the possible implementations of the first aspect. Optionally, the apparatus further includes the memory. The memory and the processor may be separately deployed, or may be deployed in a centralized manner. Optionally, the apparatus further includes a communication interface. The processor is coupled to the communication interface.

In an implementation, the communication interface may be a transceiver or an input/output interface.

In another implementation, the apparatus is a chip configured in a terminal device. When the apparatus is the chip configured in the terminal device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

During specific implementation, the processor may be one or more chips. The input circuit may be an input pin. The output circuit may be an output pin. The processing circuit may be a transistor, a gate circuit, a trigger, any logic circuit, or the like. An input signal received by the input circuit may be received and input by, but not limited to, a receiver. A signal output by the output circuit may be output to, but not limited to, a transmitter and transmitted by the transmitter. In addition, the input circuit and the output circuit may be a same circuit. The circuit is used as the input circuit and the output circuit at different moments. Specific implementations of the processor and the various circuits are not limited in this embodiment of this application.

According to a sixth aspect, a communication apparatus is provided. The apparatus includes a processor. The processor is coupled to a memory, and may be configured to execute instructions in the memory, to implement the method according to any one of the second aspect or the possible implementations of the second aspect. Optionally, the apparatus further includes the memory. The memory and the processor may be separately deployed, or may be deployed in a centralized manner. Optionally, the apparatus further includes a communication interface. The processor is coupled to the communication interface.

In an implementation, the communication interface may be a transceiver or an input/output interface.

In another implementation, the apparatus is a chip configured in a network device. When the apparatus is the chip configured in the network device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

During specific implementation, the processor may be one or more chips. The input circuit may be an input pin. The output circuit may be an output pin. The processing circuit may be a transistor, a gate circuit, a trigger, any logic circuit, or the like. An input signal received by the input circuit may be received and input by, but not limited to, a receiver. A signal output by the output circuit may be output to, but not limited to, a transmitter and transmitted by the transmitter. In addition, the input circuit and the output circuit may be a same circuit. The circuit is used as the input circuit and the output circuit at different moments. Specific implementations of the processor and the various circuits are not limited in this embodiment of this application.

According to a seventh aspect, a communication apparatus is provided. The apparatus includes a logic circuit and an input/output interface. The logic circuit is configured to be coupled to the input/output interface, and transmit data through the input/output interface, to perform the method according to any one of the first aspect or the second aspect and the possible implementations of the first aspect or the second aspect.

According to an eighth aspect, a computer-readable storage medium is provided. The computer-readable storage medium stores a computer program (which may also be referred to as code or instructions). When the computer program is run on a computer, the computer is enabled to perform the method according to any one of the first aspect or the second aspect and the possible implementations of the first aspect or the second aspect.

According to a ninth aspect, a computer program product is provided. The computer program product includes a computer program (which may also be referred to as code or instructions). When the computer program is run, a computer is enabled to perform the method according to any one of the first aspect or the second aspect and the possible implementations of the first aspect or the second aspect.

For beneficial effects brought by the fifth aspect to the ninth aspect, refer to descriptions of beneficial effects in the first aspect or the second aspect. Details are not described herein again.

### BRIEF DESCRIPTION OF DRAWINGS

FIG. 1 is a diagram of a network architecture according to an embodiment of this application;
FIG. 2 is a diagram of serving beams of a beam hopping satellite at different moments according to an embodiment of this application;
FIG. 3 is a flowchart of a cell mobility management method according to an embodiment of this application;
FIG. 4 is a diagram of a relative position between a satellite and a cell reference point according to an embodiment of this application;
FIG. 5 is a diagram of deployment planes of different types of cells according to an embodiment of this application;
FIG. 6 is a flowchart in which a terminal device obtains first information and/or a first event according to an embodiment of this application;
FIG. 7 is a diagram of relative positions between a satellite and a plurality of cell reference points according to an embodiment of this application;
FIG. 8 is a diagram of a first plane and a cell reference point on the first plane according to an embodiment of this application;
FIG. 9 is a flowchart of updating a first SIB message according to an embodiment of this application;
FIG. 10 is a flowchart of updating a second SIB message according to an embodiment of this application;
FIG. 11 is a diagram of a communication apparatus according to an embodiment of this application;
FIG. 12 is a diagram of a structure of a communication apparatus according to an embodiment of this application;
FIG. 13 is a diagram of a structure of a terminal device according to an embodiment of this application;
FIG. 14 is a diagram of a structure of a network device according to an embodiment of this application; and
FIG. 15 is a diagram of a structure of another communication apparatus according to an embodiment of this application.

### DESCRIPTION OF EMBODIMENTS

The following describes technical solutions of this application with reference to the accompanying drawings.

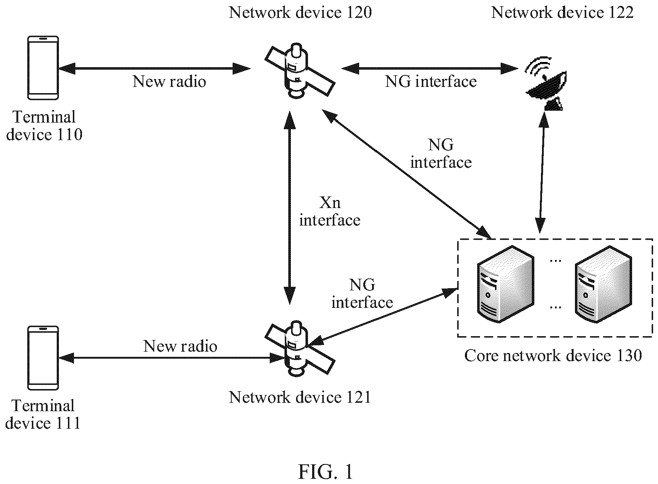

FIG. 1 is a diagram of a network architecture according to an embodiment of this application.

As shown in FIG. 1, the network architecture in which a satellite communication system is integrated with a 5th generation mobile communication technology (5th generation mobile communication technology, 5G) includes at least one terminal device such as a terminal device 110 and a terminal device 111, at least one network device such as a network device 120, a network device 121, and a network device 122, and a core network device 130. The network device may be a satellite and a gateway (gateway), and is configured to provide a communication service for the terminal device. The gateway may also be referred to as a terrestrial station, a gateway station, or the like. A link between the satellite and the terminal device is referred to as a service link (service link), and a link between the satellite and the gateway is a feeder link (feeder link).

In a 5G communication system, a terrestrial terminal device accesses a network through a 5G new air interface, and a 5G network device is deployed on the satellite, and is connected to a terrestrial core network device over a radio link. In addition, radio links exist between satellites to implement signaling exchange and user data transmission between network devices. Network nodes and interfaces between the network nodes in FIG. 1 are described as follows.

The terminal device in embodiments of this application may also be referred to as a terminal, an access terminal, user equipment, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a pad (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are intelligently designed and developed for daily wear by applying wearable technologies. The wearable device is a portable device that can be directly worn on the body or integrated into clothes or accessories of users. The wearable device is not only a hardware device, but also implements a powerful function through software support, data exchange, and cloud interaction. In a broad sense, wearable intelligent devices include full-featured and large-sized devices such as smart watches or smart glasses, that can implement complete or partial functions without depending on smartphones, and devices such as various smart bands or smart jewelry for monitoring physical signs, that dedicated to only one type of application function and need to work with other devices such as smartphones.

The network device in embodiments of this application may be any communication device that has a wireless transceiver function and that is configured to communicate with the user equipment, or may be a network device deployed on the satellite, or may be a network device deployed on the ground. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in 5G such as an NR system, or an antenna panel or a group (including a plurality of antenna panels) of antenna panels of a base station in a 5G system, or may be a network node, such as a baseband unit (BBU) or a distributed unit (distributed unit, DU), that constitutes a gNB or a transmission point.

In some deployments, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information of the RRC layer is generated by the CU, and is finally encapsulated into PHY layer information over the PHY layer of the DU, or is converted from PHY layer information. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified into a network device in an access network, or the CU may be classified into a network device in a core network (core network, CN). This is not limited in this application.

The core network device 130 is configured to perform services such as user access control, mobility management, session management, user security authentication, and charging. The core network device 130 includes a plurality of functional units, and the functional units may be divided into functional entities of a control plane and functional entities of a data plane. The functional entities are not shown in FIG. 1.

New radio: a radio link between the terminal device and the network device.

Xn interface: an interface between the network devices, mainly used for the signaling change such as handover.

NG interface: an interface between the network device and the core network device, mainly used for exchanging NAS signaling and the like of the core network and service data of the user.

In a future communication system, for example, a 6G communication system, the foregoing device may still use a name of the device in the 5G communication system, or may have another name. This is not limited in this embodiment of this application. Functions of the foregoing device may be implemented by one independent device, or may be implemented by several devices together. In actual deployment, network elements in the core network may be deployed on a same physical device or different physical devices. This is not limited in this embodiment of this application. FIG. 1 is merely an example, and does not constitute any limitation on the protection scope of this application. The communication method provided in embodiments of this application may further relate to a network element or a device that is not shown in FIG. 1. Certainly, the communication method provided in embodiments of this application may include only some of the devices shown in FIG. 1. This is not limited in embodiments of this application.

The network architecture used in embodiments of this application is merely an example, and a network architecture applicable to embodiments of this application is not limited thereto. Any network architecture that can implement the functions of the foregoing devices is applicable to embodiments of this application.

The technical solutions in embodiments of this application may be applied to various communication systems, for example, a non-terrestrial network (non-terrestrial network, NTN) system such as a satellite communication system, high altitude platform (high altitude platform station, HAPS) communication, and an uncrewed aerial vehicle, an integrated communication and navigation (integrated communication and navigation, IcaN) system, a global navigation satellite system (global navigation satellite system, GNSS), an ultra-dense low-orbit satellite communication system, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, an LTE system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a future evolved communication system, and vehicle-to-X (vehicle-to-X, V2X), where the V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like. In addition, the technical solutions may be applied to long term evolution-vehicle (long term evolution-vehicle, LTE-V), internet of vehicles, machine type communication (machine type communication, MTC), internet of things (Internet of things, IoT), long term evolution-machine (long term evolution-machine, LTE-M), machine to machine (machine to machine, M2M), and the like.

The satellite communication system includes a transparent transmission satellite architecture and a non-transparent transmission satellite architecture. Transparent transmission is also referred to as bent-pipe forwarding transmission, to be specific, only frequency conversion and signal amplification are performed on a signal on the satellite, and the satellite is transparent to the signal. Non-transparent transmission is also referred to as regeneration (on-satellite access/processing) transmission.

When the satellite works in a transparent (transparent) transmission mode, the satellite has a relay and forwarding function. The gateway has functions of a base station or some functions of a base station. Optionally, the gateway may be considered as a terrestrial base station, or a terrestrial base station and the gateway may be separately deployed.

When the satellite works in a regenerative (regenerative) mode, the satellite has a data processing capability and functions of a base station or some functions of a base station. The satellite may be considered as the base station.

The satellite may be a low earth orbit (low earth orbit, LEO) satellite, a non-geostationary earth orbit (non-geostationary earth orbit, NGEO) satellite, or the like. The satellite may provide a communication service, a navigation service, a positioning service, and the like for the terminal device by using a plurality of beams. The satellite uses the plurality of beams to cover a service area, and different beams may perform communication through one or more of time division, frequency division, and space division. The satellite performs wireless communication with the terminal device by using a broadcast communication signal, a navigation signal, and the like, and the satellite may perform wireless communication with a terrestrial station device. The satellite mentioned in embodiments of this application may be a satellite base station, or may include an orbit receiver or a repeater configured to relay information, or may be a network side device deployed on a satellite.

The satellite communication system includes the transparent transmission satellite architecture and the non-transparent transmission satellite architecture. The transparent transmission is also referred to as the bent-pipe forwarding transmission, to be specific, only the frequency conversion and the signal amplification are performed on the signal on the satellite, and the satellite is transparent to the signal, as if the satellite does not exist. The non-transparent transmission is also referred to as the regeneration (on-satellite access/processing) transmission, in other words, the satellite has some or all of functions of the base station.

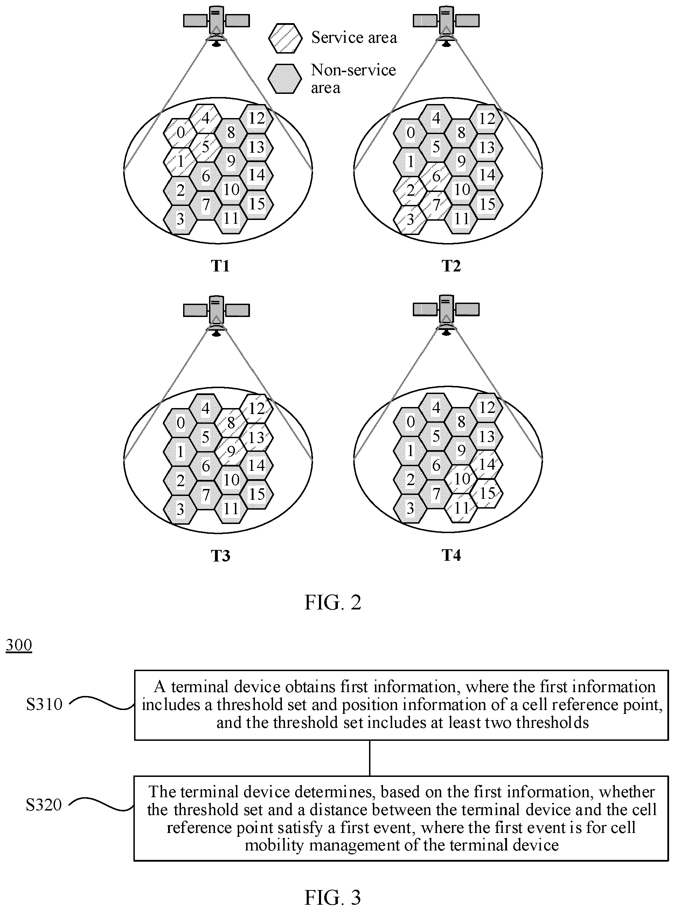

FIG. 2 is a diagram in which a beam hopping satellite provides a communication service at different moments by using different beams.

In a beam hopping satellite communication system, a single satellite is equipped with a small quantity of beams (for example, dozens of beams), and the beams serve all coverage areas of the satellite in a time sharing manner. It can be learned from FIG. 2 that the satellite provides a communication service at different moments by using different beams. An example in which the satellite forms only four beams at a same moment is used for description. At a moment T1, the four beams formed by the satellite are respectively a beam 0, a beam 1, a beam 4, and a beam 5. The satellite provides services for users within coverage of the four beams by using the four beams. At a moment T2, the four beams formed by the satellite are respectively a beam 2, a beam 3, a beam 6, and a beam 7. The satellite provides services for users within coverage of the four beams by using the four beams. At a moment T3, the four beams formed by the satellite are respectively a beam 8, a beam 9, a beam 12, and a beam 13. The satellite provides services for users within coverage of the four beams by using the four beams. At a moment T4, the four beams formed by the satellite are respectively a beam 10, a beam 11, a beam 14, and a beam 15. The satellite provides services for users within coverage of the four beams by using the four beams. It should be understood that the satellite serves, in the time sharing manner of T1, T2, T3, and T4, all the areas covered by the satellite (where an area covered by each beam may also be referred to as a beam position).

For an NR cell, there is an existing cell mobility management mechanism, for example, a cell reselection mechanism in which a terminal device monitors, in an idle mode, signal quality of a currently camped cell and a neighboring cell, and selects a cell that has good signal quality and that meets a camping condition to camp on. In the cell selection process, the selected cell for camping needs to satisfy a specific condition. For example, the terminal device detects that signal quality of the camped cell is greater than or equal to a predetermined threshold. The predetermined threshold may be indicated by a network device to the terminal device, or may be preconfigured by the terminal device.

For another example, the cell mobility management mechanism is a cell handover mechanism, including cell handover (which is similar to the foregoing cell reselection mechanism performed based on the signal quality, and is not described in detail again) triggered based on signal quality and cell handover (which is a mechanism enhanced based on the cell handover triggered based on the signal quality, and is applicable to a scenario in which a signal quality difference between a center and an edge of a cell is not explicit) triggered based on a position. If the terminal device has established a connection to a cell, the cell may be referred to as a serving cell or a source cell. Then, if a position of the terminal device changes, the cell serving the terminal device does not satisfy a condition. For example, a distance between the terminal device and the source cell is greater than a predetermined threshold, and a distance between the terminal device and a target cell is less than the predetermined threshold. In this case, the terminal device may be handed over to the target cell, and establish a connection to the target cell.

For an NTN cell, for example, cell handover triggered based on a position is described as follows. A distance between a terminal device and a source cell reference point is greater than a predetermined threshold, and a distance between the terminal device and a target cell reference point is less than the predetermined threshold. In this case, the terminal device may be handed over to a target cell, and establish a connection to the target cell.

The source cell reference point may be understood as a reference point whose position relative to a network device corresponding to a source cell remains unchanged. The target cell reference point may be understood as a reference point whose position relative to a network device corresponding to the target cell remains unchanged.

A cell may be understood as an area covered by a network device (for example, a base station), or a part of an area (for example, an area covered by a sector antenna) covered by a network device. In other words, one network device may correspond to one cell, or one network device may correspond to a plurality of cells.

The cell mobility management mechanism is applicable to mobility management of a cell deployed in a circular/regular polygon shape (for example, the cell corresponds to a predetermined position threshold). If a cell is deployed irregularly (for example, the cell is deployed in a non-circular/irregular polygon shape), efficiency of performing cell mobility management by using the foregoing mechanism is low.

If the cell mobility management mechanism changes, for example, the predetermined threshold changes, the network device may notify the terminal device by using an updated system message.

In an implementation, a system message update process is performed in a specific time window, and the specific time window is a broadcast control channel (broadcast control channel, BCCH) modification periodicity.

For example, a boundary of the BCCH modification periodicity is defined by a value of a system frame number (system frame number, SFN). In other words, if SFN mod m = 0 is satisfied at a moment, the BCCH modification periodicity is started at the moment, where m is a quantity of radio frames of the BCCH modification periodicity, and mod may be understood as a modulo operation.

In an RRC connected state, the terminal device receives a system message update indication by paging downlink control information (downlink control information, DCI), to receive the updated system message in a next BCCH modification periodicity.

In an RRC idle state, the terminal device may determine, by comparing value tags in broadcast messages, whether content of a system message changes. For example, if a value tag (value tag) in a system information block 1 (system information block 1, SIB1) received by the terminal device is different from a value tag in a previous SIB1 received by the terminal device, the terminal device re-receives an updated SIB1. If the value tag in the SIB1 received by the terminal device is the same as the value tag in the previous SIB 1 received by the terminal device, the terminal device does not re-receive a subsequent SIB1. Alternatively, the terminal device rereads a system message N hours (for example, N = 3) after correctly reading the system message last time. In this case, the terminal device reads the system message regardless of whether a value tag changes.

Due to movement of the satellite, a position of the NTN cell changes in real time. In this case, the system message needs to be updated frequently. Therefore, signaling overheads in the system message update process are high.

This application provides a cell mobility management method, to improve a success rate of the cell mobility management.

FIG. 3 is a flowchart of a cell mobility management method according to an embodiment of this application. The method 300 shown in FIG. 3 includes the following steps.

Step S310: A terminal device obtains first information, where the first information includes a threshold set and position information of a cell reference point, and the threshold set includes at least one threshold.

In a possible implementation, the cell reference point may be configured at a granularity of a cell or a beam, and the threshold in the threshold set may also be configured at a granularity of a cell or a beam.

For example, a relative position between the cell reference point relative and a network device corresponding to the cell reference point remains unchanged. If the cell reference point is configured at the granularity of a cell, in other words, one cell corresponds to one cell reference point, the cell reference point may be a center point of a cell coverage area, or the cell reference point may be another position of the cell coverage area. This is not limited in this application. If the cell reference point is configured at the granularity of a beam, and one cell includes N beams, the cell corresponds to N cell reference points, where N is an integer greater than or equal to 1. The cell reference point may be a center point of a beam coverage area, or the cell reference point may be another position of the beam coverage area. This is not limited in this application.

If the threshold in the threshold set is configured at the granularity of a cell, a cell reference point (which may be one cell reference point or more than one cell reference point) corresponding to one cell corresponds to one threshold set. For example, if cell reference points corresponding to a cell #1 include a cell reference point #1, a cell reference point #2, and a cell reference point #3, the cell reference point #1, the cell reference point #2, and the cell reference point #3 correspond to a same threshold set.

If the threshold in the threshold set is configured at the granularity of a beam, N cell reference points corresponding to one cell correspond to N threshold sets. For example, if cell reference points corresponding to a cell #1 include a cell reference point #1, a cell reference point #2, and a cell reference point #3, the cell reference point #1 corresponds to a threshold set #1, the cell reference point #2 corresponds to a threshold set #2, and the cell reference point #3 corresponds to a threshold set #3.

Alternatively, the cell reference point or the threshold set may be configured at another granularity. For example, each network device corresponds to a same cell reference point, or each network device corresponds to a same threshold set, where the network device may be a satellite. This is not limited in this application.

In a possible implementation, the position information of the cell reference point includes at least one of the following:

longitude information and latitude information, coordinate information in an earth-centered, earth-fixed coordinate system, and coordinate information in an earth-centered-inertial coordinate system.

In a possible implementation, the threshold set includes at least one of the following:
a longitude threshold and a latitude threshold;
thresholds corresponding to an x-axis, a y-axis, and a z-axis in the earth-centered, earth-fixed (earth-centered, earth-fixed, ECEF) coordinate system;
thresholds corresponding to an x-axis, a y-axis, and a z-axis in the earth-centered-inertial (earth-centered-inertial, ECI) coordinate system; and
at least one of a first angle, a second angle, and a third angle.

It should be understood that the position information of the cell reference point may alternatively be position information in another coordinate system, and the threshold set may further include a threshold on a corresponding axis in the another coordinate system. The another coordinate system is, for example, an orbital coordinate system or a launch site coordinate system. This is not limited in this application.

In a possible implementation, the cell reference point and the threshold set may be represented in at least one of the following forms:
①: longitude of the cell reference point and the longitude threshold, and latitude of cell reference point and the latitude threshold.
②: the longitude and the latitude of the cell reference point, and a plurality of longitude and latitude threshold values.
③: coordinates of the cell reference point in the ECEF and the threshold corresponding to each coordinate axis in the ECEF, or coordinates of the cell reference point in the ECI and the threshold corresponding to each coordinate axis in the ECI.
④: the position information of the cell reference point, and the at least one of the first angle, the second angle, and the third angle.

For example, the cell reference point and the threshold set are represented in the form ①. It is assumed that the longitude and the latitude of the cell reference point are 100 degrees east longitude and 40 degrees north latitude, and the threshold set includes [longitude 1°, latitude 2°]. In this case, the cell reference point and the threshold set may be represented as "100 degrees east longitude + longitude 1°; 40 degrees north latitude + latitude 2°".

The cell reference point and the threshold set are represented in the form (2). It is assumed that the longitude and the latitude of the cell reference point are 100 degrees east longitude and 40 degrees north latitude, and the threshold set includes longitude 1° and latitude 2°. In this case, the cell reference point and the threshold set are represented as "(100 degrees east longitude, 40 degrees north latitude) + (longitude 1°, latitude 2°)".

The cell reference point and the threshold set are represented in the form ③. It is assumed that the coordinates of the cell reference point in the ECEF are (x1, y1, z1), and the threshold set includes a threshold x0 corresponding to the x-axis, a threshold y0 corresponding to the y-axis, and a threshold z0 corresponding to the z-axis. In this case, the cell reference point and the threshold set are represented as "(x1, y1, z1) + (x0, y0, z0)".

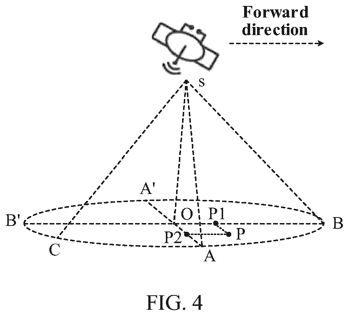

The cell reference point and the threshold set are represented in the form ④. It is assumed that a position of the cell reference point is position information 1, and the threshold set includes the first angle, the second angle, and the third angle. In this case, the cell reference point and the threshold set are represented as "position information 1 + (first angle, second angle, third angle)". The position information 1 may indicate a longitude position and a latitude position, or may indicate a position in a coordinate system, or may be other position information. This is not limited in this application. The first angle may be an angle between a connection line between the network device and the cell reference point and a first direction on a first plane. The first plane may be a plane perpendicular to a connection line between the network device and an earth center. The second angle may be an angle between the connection line between the network device and the cell reference point and a second direction on the first plane. The first direction is perpendicular to the second direction. The third angle may be a maximum off-axis angle of the network device. As shown in FIG. 4, O is the position of the cell reference point, S is a position of the satellite, a circular area in which A, B, and C are located is maximum coverage of the satellite, a plane COB is perpendicular to a connection line between the satellite and the earth center, and the plane COB is parallel to a forward direction of the satellite. The first plane is the plane COB, and the first direction is a direction OB. The direction OB is a direction from the point O to the point B, and similar descriptions in this application are deduced by analogy. The second direction is a direction OA. The first angle may be ∠OSB, the second angle may be ∠OSA, and the third angle may be LOSC.

The angle may be understood as an angle obtained by rotating (counterclockwise or clockwise) a straight line along a direction. For example, in FIG. 4, the angle between SO and the direction OB may be understood as an angle obtained by counterclockwise rotating, along the direction OB, a straight line (where the point S does not move) on which the SO is located. The first angle may be an angle obtained by counterclockwise rotating, to a coverage edge of the satellite on the plane COB and along the direction OB, the straight line on which the SO is located, that is, ∠OSB. The coverage edge of the satellite in the direction OB on the plane COB is the point B. Alternatively, the first angle may be an angle obtained by clockwise rotating, to a coverage edge of the satellite on the plane COB and along a direction OB', the straight line on which the SO is located, that is, ZOSB'. The coverage edge of the satellite in the direction OB' on the plane COB is a point B'. The second angle may be an angle obtained by counterclockwise rotating, to the coverage edge of the satellite on the plane COB and along the direction OA, the straight line on which the SO is located, that is, ∠OSA. The coverage edge of the satellite in the direction OA on the plane COB is the point A. Alternatively, the second angle may be an angle obtained by clockwise rotating, to the coverage edge of the satellite on the plane COB and along a direction OA', the straight line on which the SO is located, that is, ∠OSA'. The coverage edge of the satellite in the direction OA' on the plane COB is a point A'.

The first angle may be the angle between the connection line between the network device and the cell reference point and the first direction on the first plane, or may be understood as an angle between the connection line between the network device and the cell reference point and a first connection line. The first connection line may be a connection line between the network device and an edge point in the first direction on the first plane. The edge point in the first direction on the first plane is an edge point that is in the first direction and that is of a coverage plane of the network device on the first plane. For example, in FIG. 4, an edge point that is in the direction OB and that is of a coverage plane (the circular area in which A, B, and C are located) of the satellite on the plane COB is the point B, an edge point that is in the direction OB' and that is of the coverage plane of the satellite on the plane COB is the point B', and the first angle is LOSB or ∠OSB'.

The second angle may be the angle between the connection line between the network device and the cell reference point and the second direction on the first plane, or may be understood as an angle between the connection line between the network device and the cell reference point and a second connection line. The second connection line may be a connection line between the network device and an edge point in the second direction on the first plane. The edge point in the second direction on the first plane is an edge point that is in the second direction and that is of a coverage plane of the network device on the first plane. For example, in FIG. 4, an edge point that is in the direction OA and that is of the coverage plane of the satellite on the plane COB is the point A, an edge point that is in the direction OA' and that is of the coverage plane of the satellite on the plane COB is the point A', and the second angle is ∠OSA or LOSA'.

It should be understood that the foregoing representation forms of the cell reference point and the threshold set are merely examples. This is not limited in this application. The cell reference point and the threshold set may alternatively exist in a plurality of the foregoing representation forms simultaneously. In this case, the network device may indicate the terminal device to select a representation form to determine a first event. The cell reference point and the threshold set may alternatively exist in one of the foregoing representation forms. The plurality of representation forms may alternatively be converted to each other. This is not limited in this application.

Step S320: The terminal device determines, based on the first information, whether the threshold set and a distance between the terminal device and the cell reference point satisfy the first event, where the first event is for cell mobility management of the terminal device.

Optionally, the cell reference point includes at least one of the following: a serving cell reference point and a target cell reference point.

In a possible implementation, the first event includes at least one of the following:
event #1: a distance between the terminal device and the serving cell reference point is greater than at least one threshold in the threshold set; or
event #2: a distance between the terminal device and the target cell reference point is less than at least one threshold in the threshold set.

For example, the cell reference point and the threshold set are represented in the form ②. If position information of the serving cell reference point is (100 degrees east longitude, 40 degrees north latitude), position information of the target cell reference point is (101 degrees east longitude, 41 degrees north latitude), the threshold set is (longitude 1°, latitude 2°), and the position information of the terminal device is (102 degrees east longitude, 40 degrees north latitude), a longitude distance between the terminal device and the serving cell reference point is greater than the longitude threshold, that is, the event #1 is satisfied, and a latitude distance between the terminal device and the target cell reference point is less than the latitude threshold, that is, the event #2 is satisfied.

It should be understood that, when the cell reference point and the threshold set are represented in the form ④, the position information of the serving cell reference point or the position information of the target cell reference point may indicate a longitude position and a latitude position, or may indicate a coordinate position in coordinates. The longitude position, the latitude position, and the coordinate position may be converted to each other. As shown in FIG. 4, it is assumed that the serving cell reference point is a position of the point O, coverage of a serving cell is a circular area in which A, B, and C are located, a position of the terminal device is a position of a point P, a projection of the point P onto the first direction (the direction OB) is a point P1, and a projection of the point P onto the second direction (the direction OA) is a point P2. ZP1SB < ZOSB (the first angle) may also be understood as that a length of OP1 is less than a length of OB, in other words, the distance between the terminal device and the cell reference point is less than a threshold in the direction OB, and therefore the event #2 is satisfied. Alternatively, LP2SA < ∠OSA (the second angle) may also be understood as that a length of OP2 is less than a length of OA, in other words, the distance between the terminal device and the cell reference point is less than a threshold in the direction OA, and therefore the event #2 is satisfied. Alternatively, LOSP < LOSC (the third angle) may also be understood as that a length of OP is less than a length of OC, in other words, the distance between the terminal device and the cell reference point is less than a threshold (where the threshold may be understood as a longest distance between the cell reference point and an edge of the cell coverage area), and therefore, the event #2 is satisfied.

In other words, the first angle, the second angle, and the third angle in the threshold set may be converted into distance thresholds. For example, the first angle may be converted into the threshold (that is, the length of the OB) in the direction OB, and the second angle may be converted into the threshold (that is, the length of the OA) in the direction OA. The third angle may be converted into the threshold (that is, the length of the OC) in the direction OC (a direction in which the maximum off-axis angle is located).

The foregoing paragraph describes a method for determining whether the distance between the terminal device and the serving cell reference point satisfies the first event. A method for determining whether the distance between the terminal device and the target cell reference point satisfies the first event is similar to the foregoing descriptions. Details are not described herein again.

It should be understood that if at least one of the event #1 and the event #2 is satisfied, it is considered that the first event is satisfied. The position information of the terminal device may be determined by using global navigation satellite system (global navigation satellite system, GNSS) information of the terminal device.

In step S320, if the terminal device determines that the distance between the terminal device and the cell reference point and the threshold set satisfy the first event, the terminal device may directly initiate a cell handover or reselection procedure.

Alternatively, after the terminal device determines that the distance between the terminal device and the cell reference point and the threshold set satisfy the first event, the terminal device sends, to the network device, a measurement result corresponding to the first event, and the network device initiates a cell handover or reselection procedure.

For specific steps of initiating, by the terminal device, the cell handover or reselection procedure, or initiating, by the network device, the cell handover or reselection procedure, refer to section 7.3 in the transmission protocol TR38.821. Details are not described herein.

It should be understood that the threshold in the foregoing method 300 may alternatively not be represented in a form of the threshold set, in other words, the cell reference point corresponds to at least one threshold. This is also true for the threshold set mentioned below. Details are not described below.

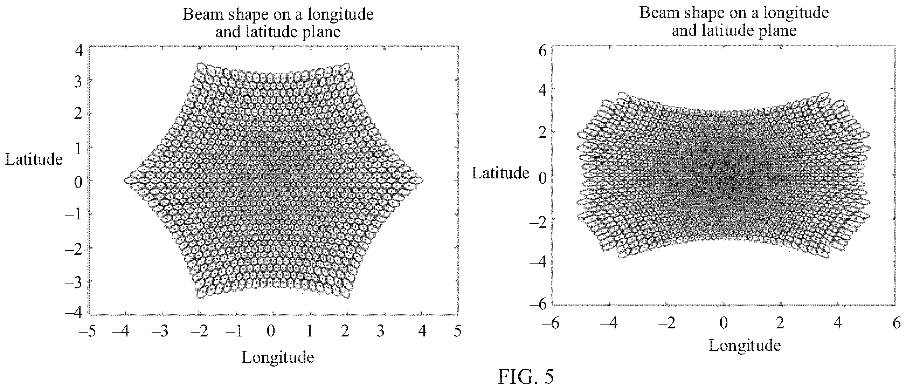

In a conventional technology, a measurement event for cell handover or reselection is associated with only one threshold. As a result, the solution in the conventional technology is applicable to only cells deployed in a regular hexagon/circular shape. However, in the method 300 provided in this embodiment, the threshold set may include at least two thresholds. When determining whether the first event is satisfied, the terminal device may consider the at least two thresholds, in other words, consider thresholds of the terminal device and the cell reference point in different directions. Therefore, the method 300 is applicable to cells deployed in an irregular polygon/non-circular shape. FIG. 5 shows beam shapes that are of cells deployed in a regular hexagon shape (left figure) and cells deployed in an irregular polygon shape (for example, deployed in a rectangular-like shape in a right figure) and that are on a longitude and latitude plane. It can be learned that, in a scenario in which the cells are deployed in the irregular polygon shape, the terminal device may consider at least two thresholds when determining the first event. For example, when determining the first event, the terminal device considers a threshold in a longitude direction and a threshold in a latitude direction. If the cells are deployed in the regular hexagon shape, the terminal device considers only one threshold when determining the first event.

The following describes different manners in which the terminal device obtains the first information and the first event.

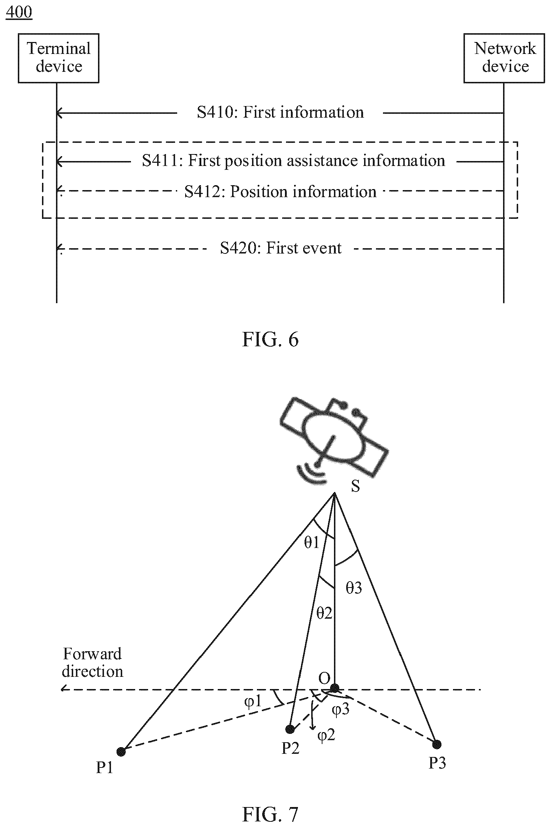

FIG. 6 is a flowchart in which a terminal device obtains first information and a first event. The method 400 shown in FIG. 6 includes the following steps.

Step S410: A network device sends the first information to the terminal device. The first information includes a threshold set and position information of a cell reference point. The threshold set includes at least one threshold. Correspondingly, the terminal device receives the first information.

The terminal device may obtain the first information through step S410, or the terminal device may obtain the first information through step S411 and step S412.

Step S411: A network device sends first position assistance information to the terminal device. The first position assistance information includes a position offset of a cell reference point relative to the network device, and threshold set information. Correspondingly, the terminal device receives the first position assistance information.

It should be understood that a position of the cell reference point relative to the network device usually remains unchanged. Therefore, the first position assistance information may include the position offset of the cell reference point relative to the network device. The threshold set information may indicate a threshold set. For example, if a threshold set is stored on a terminal device side, the threshold set information may be an offset relative to the threshold set stored on the terminal device side. Alternatively, the threshold set information is a threshold set. Alternatively, the threshold set information may be an index of a threshold set, and the terminal device and the network device store a correspondence between the threshold set and the index. Specific content of the threshold set information is not limited in this application.

For example, the position offset of the cell reference point relative to the network device may be (θ, ϕ). θ is an angle of the cell reference point relative to the network device, that is, an angle between a connection line between the cell reference point and the network device and a connection line between the network device and an earth center. ϕ is a direction angle/an azimuth of the cell reference point relative to the network device, and the direction angle/the azimuth represents a direction of the cell reference point relative to the network device. As shown in FIG. 7, the network device is a satellite. A position of the satellite is S. O, P1, P2, and P3 are on one plane. OS is perpendicular to the plane (where O may be understood as a projection of the satellite onto the plane, or may be understood as an intersection point of a connection line between the satellite and the earth center and the plane on which P1, P2, and P3 are located). The OS overlaps the connection line between the network device and the earth center. An angle (that is, an angle between SP1 and the OS) of the cell reference point P1 relative to the satellite is θ1, and a direction angle (an angle between OP1 and a forward direction of the satellite) of the cell reference point 1 relative to the satellite is ϕ1. An angle (that is, an angle between SP2 and the OS) of the cell reference point P2 relative to the satellite is θ2, and a direction angle (an angle between OP2 and the forward direction of the satellite) of the cell reference point 2 relative to the satellite is ϕ1. An angle (that is, an angle between SP3 and the OS) of the cell reference point P3 relative to the satellite is θ3, and a direction angle (an angle between OP3 and the forward direction of the satellite) of the cell reference point 3 relative to the satellite is ϕ3.

Alternatively, a position offset of the cell reference point relative to the satellite may be (d, ϕ). d is a distance between the reference point and the satellite. ϕ is the same as above, and is the direction angle of the cell reference point relative to the satellite.

Alternatively, a position offset of the cell reference point relative to the satellite may be (dx, dy, dz). dx may be a position offset of the cell reference point and the satellite on an x-axis in a coordinate system (for example, ECEF or ECI, which is not limited in this application), dy may be a position offset of the cell reference point and the satellite on a y-axis in the coordinate system, and dz may be a position offset of the cell reference point and the satellite on a z-axis in the coordinate system.

Optionally, the first position assistance information further includes status information of the position offset and/or the threshold set information. The status information is used by the terminal device to determine whether the position offset and/or the threshold set information is active.

For example, if the status information of the position offset and/or the threshold set information is active, 1 is used to identify the status information. After receiving the first position assistance information, the terminal device may determine the first information with reference to the first position assistance information. If the status information of the offset and/or the threshold set information is inactive, 0 is used to identify the status information. When receiving the first position assistance information, the terminal device cannot determine the first information with reference to the first position assistance information. Reference made to the first position assistance information may be understood as that, in addition to the first position assistance information, the terminal device may further refer to other information (for example, ephemeris information of the network device mentioned below). Alternatively, if the status information is active, 0 is used to identify the status information. If the status information is inactive, 1 is used to identify the status information. Alternatively, the status information may be identified in another manner. This is not limited in this application.

Optionally, the first position assistance information further includes validity time of the status information.

For example, if the status information is active, and validity time of the activation is T1, the terminal device may determine the first information with reference to the first position assistance information within the period T 1 after receiving the first position assistance information. Alternatively, if the status information is inactive, and validity time of the inactivation is T2, the terminal device cannot determine the first information with reference to the first position assistance information within the period T2 after receiving the first position assistance information.

For a large-scale beam hopping system, there are usually a large quantity of cell reference points in coverage of a satellite. For example, there are hundreds or even thousands of cell reference points in the coverage area of the satellite.

In a possible implementation, when the first position assistance information includes position offsets of a plurality of cell reference points relative to the network device, the position offsets include position offsets of that are a plurality of cell reference points on a first plane and that are relative to the network device. The first plane includes a plane perpendicular to the connection line between the network device and the earth center.

Optionally, the first position assistance information further includes at least one of the following: a start point of the first plane, an angle between a first direction on the first plane and the connection line (the connection line between the network device and the earth center, or the connection line between the network device and the cell reference point), an angle between a second direction on the first plane and the connection line (the connection line between the network device and the earth center, or the connection line between the network device and the cell reference point), and a maximum off-axis angle. The first direction is perpendicular to the second direction.

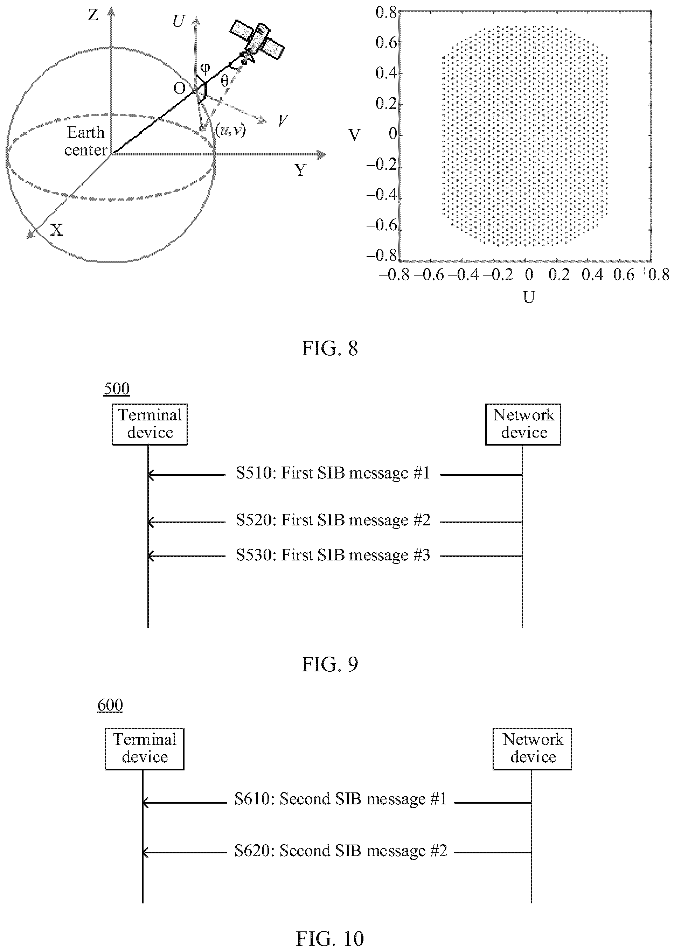

For example, as shown in FIG. 8, the first plane may be a UV plane. The UV plane shown in a left figure in FIG. 8 is on a surface of the earth. The UV plane may alternatively be a surface parallel to the surface of the earth. A point O is a projection of a satellite onto the UV plane, θ is the angle of the cell reference point relative to the network device, that is, the angle between the connection line between the cell reference point and the network device and the connection line between the network device and the earth center, and ϕ is the direction angle/the azimuth of the cell reference point relative to the network device. In FIG. 8, θ shown in the left figure is an angle between a connection line between the satellite and a cell reference point and the connection line between the satellite and the earth center, ϕ is an angle between a connection line between O and a cell reference point and a direction U, and the direction angle/the azimuth represents a direction of the cell reference point relative to the network device. This is not limited in this application. A right figure in FIG. 8 is a plane diagram of the UV plane shown in the left figure. In the right figure, a start point of the UV plane may be a center point (0, 0) (which may be understood as coordinates that are of the projection of the satellite onto the UV plane and that are on the UV plane). An angle between the direction U and the connection line (the connection line between the network device and the earth center, or the connection line between the network device and the cell reference point) is, for example, ±33 degrees (where the direction U may be understood as the direction OB in FIG. 4, and the angle between the direction U and the connection line, namely, ∠OSB, is ±33 degrees). A coverage width (that is, a maximum coordinate of the cell reference point in the U direction in the right figure, where the maximum coordinate may be a value obtained through a modulo operation) of the direction U in the right figure may be determined based on the angle. An angle between a direction V and the connection line (the connection line between the network device and the earth center, or the connection line between the network device and the cell reference point) is, for example, ±45 degrees (where the direction V may be understood as the direction OA in FIG. 4, in other words, ∠OSA is ±45 degrees.) A coverage width (that is, a maximum coordinate of the cell reference point in the direction V in the right figure, where the maximum coordinate may be a value obtained through a modulo operation) of the direction V in the right figure may be determined based on the angle. The maximum off-axis angle is, for example, ±47 degrees (which corresponds to LOSC in FIG. 4, where LOSC is ±45 degrees).

Generally, if a coverage area of a single satellite is a regular hexagon topology on the UV plane, the first position assistance information may include only a UV reference point and corresponding radius information. For example, the UV reference point is set to (0, 0), and a UV radius is set to 0.1 (which corresponds to FIG. 4, where it is assumed that the circular area in which A, B and C are located is a regular circle, and the UV radius may be a radius of the circle ABC).

If the coverage area of the single satellite is an irregular polygon topology on the first plane, the first position assistance information further needs to include at least one of the following: the start point of the first plane, the angle between the first direction on the first plane and the connection line between the cell reference point (or the earth center) and the network device, the angle between the second direction on the first plane and the connection line between the cell reference point (or the earth center) and the network device, and the maximum off-axis angle.

The one or more cell reference points in the first position assistance information may be a local cell reference point (which may be one or more) and/or one or more neighboring cell reference points.

Step S412: The network device sends the ephemeris information to the terminal device. Correspondingly, the terminal device receives the ephemeris information.

For example, in a satellite communication system, position information of the network device may be ephemeris information of a satellite. The ephemeris information of the satellite may be ephemeris information of a local cell, or may be ephemeris information of one or more neighboring cells. This is not limited in this application.

The terminal device may determine position information (which may be understood as an absolute position) of each cell reference point and the threshold set based on the ephemeris information (which changes with movement of the network device, for example, the satellite) in step S412 and the position offset (a relative position offset, which usually remains unchanged) in step S411, that is, determine the first information (which corresponds to the first information in S310 or S410).

Optionally, the method 400 further includes:
Step S420: The network device sends the first event to the terminal device, and correspondingly, the terminal device receives the first event.

Alternatively, the first event may be preconfigured in the terminal device.

In a possible implementation, the first information in S410 and the first event in S420 may be carried in any one of the following messages:
DCI, a media access control control element (media access control control element, MAC CE), a SIB message, or an RRC reconfiguration message.

It should be understood that the first information in step S410 and the first event in step S420 may be carried in a same message, or may be carried in different messages. This is not limited in this application. When the information is carried in different messages, a sequence of the foregoing steps is not limited in this application.

Alternatively, the first position assistance information in S411, the position information in S412, and the first event in S420 may be carried in at least one of the following messages: DCI, a MAC CE, a SIB message, and an RRC reconfiguration message.

Certainly, the information in the foregoing procedure may alternatively be carried in another message. This is not limited in this application. The first position assistance information in S411, the position information in S412, and the first event in S420 may be carried in a same message, or may be carried in different messages. This is not limited in this application. When the information is carried in different messages, a sequence of the foregoing steps is not limited in this application.

The following describes how to update system information, for example, update the position information of the cell reference point. Different information may be classified. For example, the information is classified into stable information (that is, information that does not change in short duration) and dynamically changing information, and the two types of information are carried in different messages.

For example, the SIB message is used as an example. The position offset in the position assistance information and the threshold set are stable. Therefore, the two pieces of information are carried in a first SIB message. The first SIB message may further include some other configuration information that does not change relative to coordinates of a satellite body, for example, at least one of the following: a basic bandwidth part (bandwidth part, BWP) configuration (that is, a mapping relationship between a beam and a frequency), basic color multiplexing (that is, a frequency/polarization multiplexing method), and a basic neighboring cell relationship (for example, a neighboring satellite or a neighboring cell of the satellite). This is not limited in this application.

The ephemeris information changes with the movement of the network device (for example, the satellite). Therefore, the ephemeris information is carried in a second SIB message. The second SIB message may further include some other information that changes in real time relative to the coordinates of the satellite body, for example, at least one of the following: a dynamic offset (that is, an offset relative to the basis, for example, an offset relative to the basic bandwidth part, an offset relative to the basic color multiplexing, or a change relative to the basic neighboring cell relationship) and an active/inactive state of the neighboring cell. This is not limited in this application.

The first SIB message and the second SIB message may be understood as two different types of SIB messages.

A specific update procedure of the first SIB message may be shown in FIG. 9. A method 500 shown in FIG. 9 includes the following steps.

Step S520: The network device sends a first SIB message #2 to the terminal device. The first SIB message #2 includes the first position assistance information and a first value tag. Correspondingly, the terminal device receives the first SIB message #2.

When values of the first value tag and a second value tag are different, S530 is performed.

Step S530: The terminal device receives an updated first SIB message (for example, a first SIB message #3). The updated first SIB message includes second position assistance information. The second value tag is a value tag included in the first SIB message (for example, a first SIB message #1 in step S510) before the first SIB message is updated.

In a possible implementation, the first SIB message further includes a version number of the first SIB message. The terminal device obtains a correspondence between the version number of the first SIB message and the position assistance information, and may determine, based on the correspondence between the version number of the first SIB message and the position assistance information, position assistance information (for example, the first position assistance information) corresponding to a version number, to determine the first information.

It should be understood that the version number is used to identify a version message of the first SIB message, and different version numbers may be used to distinguish between different first SIB messages. A specific representation form of the version number is not limited in this application.

Optionally, after receiving the first SIB message, the terminal device stores the correspondence between the version number of the first SIB message and the position assistance information. Subsequently, the terminal device may determine the first information by obtaining the correspondence.

For example, a cell reference point in the position assistance information may change. For example, in a cell deployed by a beam hopping satellite, beams formed by the beam hopping satellite are different at different moments. If the cell reference point uses a beam as a granularity, the cell reference point periodically changes. It is assumed that position assistance information at different moments is different, and the moment may be associated with a version number. At a moment t, the terminal device may determine, based on a correspondence between the version number and position assistance information, the position assistance information corresponding to the moment t, then determine ephemeris information (which may be determined based on a correspondence between the ephemeris information and a version number of the second SIB message) corresponding to the moment t, and may further obtain first information corresponding to the moment t. If there is no corresponding version number of the first SIB message at the moment t, a first SIB message update process may be initiated, in other words, the network device is requested to send the updated first SIB message. The terminal device stores a version number of the updated first SIB message and position assistance information, to subsequently determine the first information.

A specific update procedure of the second SIB message may be shown in FIG. 10. A method 600 shown in FIG. 10 includes the following steps.

Step S610: The network device sends a second SIB message #1 to the terminal device. Correspondingly, the terminal device receives the second SIB message #1. The second SIB message #1 includes first ephemeris information and a version number of the second SIB message #1.

In a possible implementation, the terminal device obtains a correspondence between a version number of the second SIB message and the ephemeris information, and may determine, based on the correspondence between the version number of the second SIB message and the ephemeris information, ephemeris information (for example, the first ephemeris information) corresponding to a version number, to determine the first information.

Optionally, the terminal device stores a correspondence between the first ephemeris information and the version number of the second SIB message #1, and the correspondence is used to determine the first information.

Step S620: The network device sends a second SIB message #2 to the terminal device. Correspondingly, the terminal device receives the second SIB message #2. The second SIB message #2 includes second ephemeris information and a version number of the second SIB message #2.

It should be understood that, same as the first SIB message, the terminal device may store a correspondence between the first ephemeris information and the version number of the second SIB message. Because the network device (for example, a satellite) periodically moves, the terminal device may store different ephemeris information in one motion periodicity. The different ephemeris information corresponds to version numbers of different second SIB messages. When the terminal device has not stored enough ephemeris information of the network device in the motion periodicity, the terminal device may initiate a second SIB message update process, for example, request the network device to send an updated second SIB message. The terminal device stores a version number of the updated second SIB message (for example, the second SIB message #2 in step S620) and ephemeris information, to subsequently determine the first information.

The foregoing system information update method can avoid frequent update of the network device, to reduce signaling overheads.

The following describes another solution for avoiding frequent update of the system information.

The network device delivers a plurality of configurations to the terminal device. For example, a configuration 1 includes the first event, and a configuration 2 includes a second event. At least one of a threshold set and a cell reference point that are used to determine whether the second event is satisfied is different from at least one of the threshold set and the cell reference point that are used to determine whether the first event is satisfied.

Alternatively, the terminal device locally pre-configures a plurality of configurations. For example, a configuration 1 includes the first event, and a configuration 2 includes a second event. At least one of a threshold set and a cell reference point that are used to determine whether the second event is satisfied is different from at least one of the threshold set and the cell reference point that are used to determine whether the first event is satisfied.

For example, the terminal device may perform cell mobility management by using the configuration 1 when latitude is x1 or a latitude range is [x1, x2], and the terminal device performs cell mobility management by using the configuration 2 when the latitude is y1 or the latitude range is [y1, y2].

A configuration used by the terminal device at a position may be indicated by the network device, or the terminal device locally pre-configures a rule for determining, based on a position of the terminal device, a configuration to be used for the cell mobility management. This is not limited in this application.

The steps shown in the dashed lines in the foregoing flowchart are optional steps, and a sequence of the steps is determined based on internal logic of the method. Sequence numbers shown in the foregoing flowchart are merely examples, and do not limit a sequence of the steps in this application.

It should be further understood that the methods provided in embodiments of this application may be used individually, or may be used together. This is not limited in this application. Various implementations provided in embodiments of this application may be used individually, or may be used together. This is not limited in this application.

It should be understood that the term "and/or" in this application describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between associated objects, but may alternatively indicate an "and/or" relationship. For details, refer to the context for understanding.

In this application, "at least one item (piece)" means one item (piece) or more items (pieces), and "at least two items (pieces)" and "a plurality of items (pieces)" mean two items (pieces) or more items (pieces). "At least one of the following items (pieces)" or a similar expression thereof means any combination of these items, including any combination of a singular item (piece) or plural items (pieces). For example, at least one of a, b, or c may represent: a, b, c, a and b, a and c, b and c, or a, b, and c, where a, b, and c may be singular or plural.

It should be noted that the execution body shown in FIG. 3/FIG. 6/FIG. 9/FIG. 10 is merely an example, and the execution body may alternatively be a chip, a chip system, or a processor that supports the execution body in implementing the method shown in FIG. 3/FIG. 6/FIG. 9/FIG. 10. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, methods and operations implemented by the terminal device may further be implemented by a component (for example, a chip or a circuit) that may be used in the terminal device, and methods and operations implemented by the network device may further be implemented by a component (for example, a chip or a circuit) that may be used in the network device.

The foregoing mainly describes the solutions provided in embodiments of this application from a perspective of interaction between network elements. It may be understood that, to implement the foregoing functions, each network element such as a transmit-end device or a receive-end device includes a corresponding hardware structure and/or software module for performing each function. A person skilled in the art may be aware that, in combination with the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmit-end device or the receive-end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

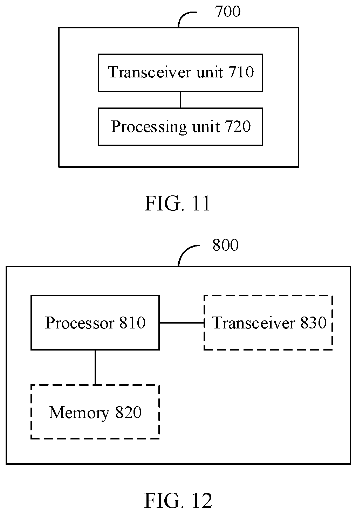

FIG. 11 is a block diagram of a communication apparatus according to an embodiment of this application. As shown in FIG. 11, the communication apparatus 700 includes a transceiver unit 710 and a processing unit 720. The transceiver unit 710 may communicate with the outside, and the processing unit 720 is configured to process data. The transceiver unit 710 may also be referred to as a communication interface or a communication unit.

Optionally, the communication apparatus 700 may further include a storage unit. The storage unit may be configured to store instructions and/or data. The processing unit 720 may read the instructions and/or the data in the storage unit.

In a design, the communication apparatus 700 may be configured to perform actions performed by the terminal device in the foregoing method embodiment (the method 300, 400, 500, or 600).

Optionally, the communication apparatus 700 may be a terminal device. The transceiver unit 710 is configured to perform a receiving or sending operation of the terminal device in the foregoing method embodiment. The processing unit 720 is configured to perform an internal processing operation of the terminal device in the foregoing method embodiment.

Optionally, the communication apparatus 700 may be a device including a terminal device. Alternatively, the communication apparatus 700 may be a component configured in the terminal device, for example, a chip in the terminal device. In this case, the transceiver unit 710 may be an interface circuit, a pin, or the like. Specifically, the interface circuit may include an input circuit and an output circuit, and the processing unit 720 may include a processing circuit.

In a possible implementation, the transceiver unit 710 is configured to obtain first information. The first information includes a threshold set and position information of a cell reference point. The threshold set includes at least two thresholds. The processing unit 720 determines, based on the first information, whether the threshold set and a distance between the terminal device and the cell reference point satisfy a first event. The first event is for cell mobility management of the terminal device.

In a possible implementation, the cell reference point includes at least one of the following: a serving cell reference point and a target cell reference point. The transceiver unit 710 is configured to obtain the first event. The first event includes at least one of the following: a distance between the terminal device and the serving cell reference point is greater than at least one threshold in the threshold set, or a distance between the terminal device and the target cell reference point is less than at least one threshold in the threshold set.

In a possible implementation, the threshold set includes at least one of the following: a longitude threshold and a latitude threshold, thresholds corresponding to an x-axis, a y-axis, and a z-axis in an earth-centered, earth-fixed coordinate system, thresholds corresponding to an x-axis, a y-axis, and a z-axis in an earth-centered-inertial coordinate system, and at least two of a first angle, a second angle, and a third angle.

In a possible implementation, the transceiver unit 710 is further configured to obtain first position assistance information. The first position assistance information includes position offsets of one or more cell reference points relative to a network device, and threshold set information. The transceiver unit 710 is further configured to obtain ephemeris information. The processing unit 720 is further configured to determine the first information based on the first position assistance information and the ephemeris information.

In a possible implementation, the first position assistance information includes the position offsets of the plurality of cell reference points relative to the network device. The position offsets include position offsets that are of a plurality of cell reference points on a first plane and that are relative to the network device. The first plane includes a plane perpendicular to a connection line between the network device and an earth center.

In a possible implementation, the first position assistance information further includes at least one of the following: a start point of the first plane, an angle between a first direction on the first plane and the connection line (the connection line between the network device and the earth center), an angle between a second direction on the first plane and the connection line, and a maximum off-axis angle. The first direction is perpendicular to the second direction.

In a possible implementation, the first position assistance information further includes status information of at least one of the position offset and the threshold set information. The status information is used by the terminal device to determine whether the at least one of the position offset and the threshold set information is active.

In a possible implementation, the first position assistance information further includes validity time of the status information.

In a possible implementation, the transceiver unit 710 is further configured to obtain a first SIB message. The first SIB message includes the first position assistance information and a first value tag. When values of the first value tag and a second value tag are different, the transceiver unit 710 is further configured to obtain an updated first SIB message. The updated first SIB message includes second position assistance information. The second value tag is a value tag included in the first SIB message before the first SIB message is updated.

In a possible implementation, the first SIB message further includes a version number of the first SIB message. The processing unit 720 is further configured to obtain a correspondence between the version number of the first SIB message and position assistance information. The correspondence between the version number of the first SIB message and the position assistance information is used to determine the first information.

In a possible implementation, the transceiver unit 710 is further configured to obtain a second SIB message. The second SIB message includes the ephemeris information and a version number of the second SIB message. There is a correspondence between the ephemeris information and the version number of the second SIB message. The correspondence between the ephemeris information and the version number of the second SIB message is used to determine the first information.

In another design, the communication apparatus 700 shown in FIG. 11 may be configured to perform actions performed by the network device in the foregoing method embodiment (the method 400, 500, or 600).

Optionally, the communication apparatus 700 may be a network device. The transceiver unit 710 is configured to perform a receiving or sending operation of the network device in the foregoing method embodiment. The processing unit 720 is configured to perform an internal processing operation of the network device in the foregoing method embodiment.

Optionally, the communication apparatus 700 may be a device including a network device. Alternatively, the communication apparatus 700 may be a component configured in the network device, for example, a chip in the network device. In this case, the transceiver unit 710 may be an interface circuit, a pin, or the like. Specifically, the interface circuit may include an input circuit and an output circuit, and the processing unit 720 may include a processing circuit.

In a possible implementation, the transceiver unit 710 is configured to send first information. The first information includes a threshold set and position information of a cell reference point. The threshold set includes at least two thresholds. The first information is used to determine whether the threshold set and a distance between a terminal device and the cell reference point satisfy a first event. The first event is for cell mobility management of the terminal device.

In a possible implementation, the cell reference point includes at least one of the following: a serving cell reference point and a target cell reference point. The transceiver unit 710 is further configured to send the first event. The first event includes at least one of the following: a distance between the terminal device and the serving cell reference point is greater than at least one threshold in the threshold set, or a distance between the terminal device and the target cell reference point is less than at least one threshold in the threshold set.

In a possible implementation, the threshold set includes at least one of the following: a longitude threshold and a latitude threshold, thresholds corresponding to an x-axis, a y-axis, and a z-axis in an earth-centered, earth-fixed coordinate system, thresholds corresponding to an x-axis, a y-axis, and a z-axis in an earth-centered-inertial coordinate system, and at least two of a first angle, a second angle, and a third angle.

In a possible implementation, the transceiver unit 710 is further configured to send first position assistance information. The first position assistance information includes a position offset of the cell reference point relative to the network device, and threshold set information. The network device sends ephemeris information. The ephemeris information and the first position assistance information are used to determine the first information.

In a possible implementation, the first position assistance information includes position offsets of a plurality of cell reference points relative to the network device. The position offsets include position offsets that are of a plurality of cell reference points on a first plane and that are relative to the network device. The first plane includes a plane perpendicular to a connection line between the network device and an earth center.

In a possible implementation, the first position assistance information further includes at least one of the following: a start point of the first plane, an angle between a first direction on the first plane and the connection line (the connection line between the network device and the earth center), an angle between a second direction on the first plane and the connection line, and a maximum off-axis angle. The first direction is perpendicular to the second direction.

In a possible implementation, the first position assistance information further includes status information of at least one of the position offset and the threshold set information. The status information is used by the terminal device to determine whether the at least one of the position offset and the threshold set information is active.

In a possible implementation, the first position assistance information further includes validity time of the status information.

In a possible implementation, the transceiver unit 710 is further configured to send a first SIB message. The first SIB message includes the first position assistance information. When the first position assistance information changes, the transceiver unit 710 is further configured to send an updated first SIB message. The updated first SIB message includes second position assistance information.

In a possible implementation, the first SIB message further includes a version number of the first SIB message. There is a correspondence between the version number of the first SIB message and position assistance information. The correspondence between the version number of the first SIB message and the position assistance information is used to determine the first information.

In a possible implementation, the transceiver unit 710 is further configured to send a second SIB message. The second SIB message includes the ephemeris information and a version number of the second SIB message. There is a correspondence between the ephemeris information and the version number of the second SIB message. The correspondence between the ephemeris information and the version number of the second SIB message is used to determine the first information.

As shown in FIG. 12, an embodiment of this application further provides a communication apparatus 800. The communication apparatus 800 includes a processor 810. The processor 810 is coupled to a memory 820. The memory 820 is configured to store a computer program or instructions and/or data. The processor 810 is configured to execute the computer program or the instructions and/or the data stored in the memory 820, so that the methods in the foregoing method embodiments are performed.

Optionally, the communication apparatus 800 includes one or more processors 810.

Optionally, as shown in FIG. 12, the communication apparatus 800 may further include the memory 820.

Optionally, the communication apparatus 800 may include one or more memories 820.

Optionally, the memory 820 may be integrated with or separated from the processor 810.

Optionally, as shown in FIG. 12, the communication apparatus 800 may further include a transceiver 830 and/or a communication interface. The transceiver 830 and/or the communication interface are/is configured to receive and/or send a signal. For example, the processor 810 is configured to control the transceiver 830 and/or the communication interface to receive and/or send the signal.

In a solution, the communication apparatus 800 is configured to implement operations performed by the terminal device in the foregoing method embodiments. For example, the processor 810 is configured to implement an operation (for example, the operation of step S310 or S320) performed inside the terminal device in the foregoing method embodiment, and the transceiver 830 is configured to implement a receiving or sending operation (for example, the operation of step S410, S411, S412, S420, S510, S520, S530, S610, or S620) performed by the terminal device in the foregoing method embodiment.

In a solution, the communication apparatus 800 is configured to implement operations performed by the network device in the foregoing method embodiments. For example, the processor 810 is configured to implement an operation performed inside the network device in the foregoing method embodiment, and the transceiver 830 is configured to implement a receiving or sending operation (for example, the operation of step S410, S411, S412, S420, S510, S520, S530, S610, or S620) performed by the network device in the foregoing method embodiment.

An embodiment of this application further provides a communication apparatus 900. The communication apparatus 900 may be a terminal device or a chip. The communication apparatus 900 may be configured to perform operations performed by the terminal device in the foregoing method embodiment (the method 300, 400, 500, or 600).

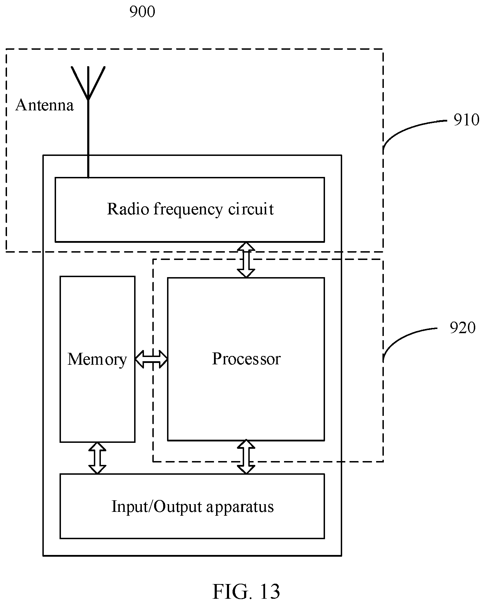

When the communication apparatus 900 is the terminal device, FIG. 13 is a simplified diagram of a structure of the terminal device. As shown in FIG. 13, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit, and the radio frequency circuit performs radio frequency processing on the baseband signal and then sends a radio frequency signal to the outside in a form of an electromagnetic wave via the antenna. When data is sent to the terminal device, the radio frequency circuit receives a radio frequency signal via the antenna, converts the radio frequency signal into a baseband signal, and outputs the baseband signal to the processor. The processor converts the baseband signal into data, and processes the data. For ease of description, FIG. 13 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 13, the terminal device includes a transceiver unit 910 and a processing unit 920. The transceiver unit 910 may also be referred to as a transceiver, a transceiver machine, a transceiver apparatus, a transceiver circuit, or the like. The processing unit 920 may also be referred to as a processor, a processing board, a processing module, a processing apparatus, or the like.

Optionally, a component that is in the transceiver unit 910 and that is configured to implement a receiving function may be considered as a receiving unit, and a component that is in the transceiver unit 910 and that is configured to implement a sending function may be considered as a sending unit. In other words, the transceiver unit 910 includes the receiving unit and the sending unit. The receiving unit may also be referred to as a receiver machine, a receiver, a receiving apparatus, a receiving circuit, or the like sometimes. The sending unit may also be referred to as a transmitter machine, a transmitter, a transmitting apparatus, a transmitting circuit, or the like.

For example, in an implementation, the processing unit 920 is configured to perform a processing action on a terminal device side in FIG. 3. For example, the processing unit 920 is configured to perform a processing step in step S310 or S320 in FIG. 3.

For another example, the transceiver unit 910 is configured to perform a receiving and sending operation in steps S410, S411, S412, S420, S510, S520, S530, S610, or S620 in FIG. 6/FIG. 9/FIG. 10.

It should be understood that FIG. 13 is merely an example rather than a limitation. The terminal device including the transceiver unit and the processing unit may not depend on the structure shown in FIG. 13.

When the communication apparatus 900 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a communication apparatus 1000. The communication apparatus 1000 may be a network device or a chip. The communication apparatus 1000 may be configured to perform operations performed by the network device in the foregoing method embodiments.

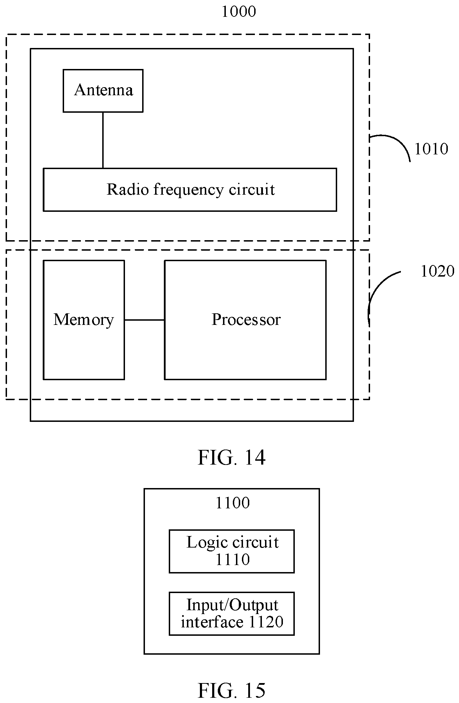

When the communication apparatus 1000 is the network device (for example, a satellite base station), FIG. 14 is a simplified diagram of a structure of the network device. The network device includes a part 1010 and a part 1020. The part 1010 includes an antenna and a radio frequency circuit. The antenna is mainly configured to receive and send a radio frequency signal. The radio frequency circuit is mainly configured to perform conversion between a radio frequency signal and a baseband signal. The part 1020 includes a memory and a processor, and is mainly configured to: perform baseband processing, control the network device, and the like. The part 1010 may usually be referred to as a transceiver unit, a transceiver machine, a transceiver circuit, a transceiver, or the like. The part 1020 is usually a control center of the network device, and may be usually referred to as a processing module, and is configured to control the network device to perform a processing operation on a network device side in the foregoing method embodiments.

Optionally, a component that is in the part 1010 and that is configured to implement a receiving function may be considered as a receiving unit, and a component that is in the part 1010 and that is configured to implement a sending function may be considered as a sending unit. In other words, the part 1010 includes the receiving unit and the sending unit. The receiving unit may also be referred to as a receiving machine, a receiver, a receiving circuit, or the like. The sending unit may be referred to as a transmitter machine, a transmitter, a transmitting circuit, or the like.

When needing to send data, after performing baseband processing on the to-be-sent data, the processor outputs a baseband signal to the radio frequency circuit, and the radio frequency circuit performs radio frequency processing on the baseband signal and then sends a radio frequency signal to the outside in a form of an electromagnetic wave via the antenna. When data is sent to the network device, the radio frequency circuit receives a radio frequency signal via the antenna, converts the radio frequency signal into a baseband signal, and outputs the baseband signal to the processor. The processor converts the baseband signal into data, and processes the data.

The part 1020 may include one or more boards, and each board may include one or more processors and one or more memories. For ease of description, FIG. 14 shows only one memory and one processor. The processor is configured to read and execute a program in the memory to implement a baseband processing function and control the network device. If there are a plurality of boards, the boards may be interconnected with each other, to enhance a processing capability. In an optional implementation, the plurality of boards may share one or more processors, or the plurality of boards may share one or more memories.

For example, in an implementation, the transceiver unit in the part 1010 is configured to perform a receiving and sending operation in steps S410, S411, S412, S420, S510, S520, S530, S610, or S620 in FIG. 6/FIG. 9/FIG. 10.

It should be understood that FIG. 14 is merely an example rather than a limitation. The network device including the transceiver unit and the processing unit may not depend on the structure shown in FIG. 14.

When the communication apparatus 1000 is a chip, the chip includes a transceiver unit and a processing unit. The transceiver unit may be an input/output circuit or a communication interface. The processing unit is a processor, a microprocessor, or an integrated circuit integrated on the chip.

As shown in FIG. 15, an embodiment of this application further provides a communication apparatus 1100. The communication apparatus 1100 includes a logic circuit 1110 and an input/output interface (input/output interface) 1120.

The logic circuit 1110 may be a processing circuit in the communication apparatus 1100. The logic circuit 1110 may be coupled to a storage unit, and invoke instructions in the storage unit, so that the communication apparatus 1100 can implement the methods and functions in embodiments of this application. The input/output interface 1120 may be an input/output circuit in the communication apparatus 1100, and outputs information processed by the communication apparatus 1100, or inputs to-be-processed data or signaling information into the communication apparatus 1100 for processing.

In a solution, the communication apparatus 1100 is configured to implement operations performed by the terminal device in the foregoing method embodiments.

For example, the logic circuit 1110 is configured to implement a processing-related operation performed by the terminal device in the foregoing method embodiment, for example, configured to implement a processing operation in step S310 or S320 in the method 300. The input/output interface 1120 is configured to implement a sending and/or receiving-related operation performed by the terminal device in the foregoing method embodiment, for example, a receiving and sending operation of the terminal device in step S410, S411, S412, S420, S510, S520, S530, S610, or S620 in FIG. 6/FIG. 9/FIG. 10. For a specific operation performed by the logic circuit 1110, refer to the foregoing descriptions of the processing unit 720. For an operation performed by the input/output interface 1120, refer to the foregoing descriptions of the transceiver unit 710. Details are not described herein again.

In another solution, the communication apparatus 1100 is configured to implement operations performed by the network device in the foregoing method embodiments.

For example, the logic circuit 1110 is configured to implement a processing-related operation performed by the network device in the foregoing method embodiment, for example, a processing-related operation performed by the network device in the embodiment shown in FIG. 6/FIG. 9/FIG. 10. The input/output interface 1120 is configured to implement a sending and/or receiving-related operation performed by the network device in the foregoing method embodiment, for example, a receiving and sending operation of the network device in step S410, S411, S412, S420, S510, S520, S530, S610, or S620 in FIG. 6/FIG. 9/FIG. 10. For a specific operation performed by the logic circuit 1110, refer to the foregoing descriptions of the processing unit 820. For an operation performed by the input/output interface 1120, refer to the foregoing descriptions of the transceiver unit 810. Details are not described herein again.

It should be understood that the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps in the foregoing methods can be implemented through an integrated logic circuit of hardware in the processor, or by using instructions in a form of software. The steps of the method disclosed with reference to embodiments of this application may be directly performed and completed by hardware in a processor, or may be performed and completed by using a combination of hardware in a processor and a software module. The software module may be located in a mature storage medium in the conventional technology, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented through an integrated logic circuit of hardware in the processor, or by using instructions in a form of software. The processor may be a general-purpose processor, a digital signal processor (DSP), an application-specific integrated circuit (ASIC), a field programmable gate array (FPGA) or another programmable logic device, a discrete gate, a transistor logic device, or a discrete hardware component. It may implement or perform the methods, the steps, and the logical block diagrams that are disclosed in embodiments of this application. The general-purpose processor may be a microprocessor, or the processor may be any conventional processor or the like. The steps of the method disclosed with reference to embodiments of this application may be directly performed and completed by hardware in a decoding processor, or may be performed and completed by using a combination of hardware in a decoding processor and a software module. The software module may be located in a mature storage medium in the conventional technology, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the methods provided in embodiments of this application, this application further provides a computer-readable medium. The computer-readable medium stores program code. When the program code is run on a computer, the computer is enabled to perform the methods in embodiments shown in FIG. 3 to FIG. 6. For example, when a computer program is executed by the computer, the computer is enabled to implement the method performed by the network device or the method performed by the terminal device in the foregoing method embodiments.

An embodiment of this application further provides a computer program product including instructions. When the instructions are executed by a computer, the computer is enabled to implement the method performed by the network device or the method performed by the terminal device in the foregoing method embodiments.

For explanations and beneficial effects of related content in any communication apparatus provided above, refer to the foregoing corresponding method embodiments. Details are not described herein again.

A part or all of the foregoing embodiments may be implemented by using software, hardware, firmware, or any combination thereof. When the software is used for implementation, the part or all of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid-state disk, SSD)), or the like.

The network device and the terminal device in the foregoing apparatus embodiments correspond to the network device or the terminal device in the method embodiments. A corresponding module or unit performs a corresponding step. For example, a communication unit (a transceiver) performs a receiving or sending step in the method embodiments, and a step other than the receiving or sending step may be performed by a processing unit (a processor). For a function of a specific unit, refer to a corresponding method embodiment. There may be one or more processors.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and components may be located on one computer and/or distributed between two or more computers. In addition, these components may be executed from various computer-readable media that store various data structures. For example, the component may communicate based on a local and/or remote process by using, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell mobility management method, comprising:
obtaining, by a terminal device, first information, wherein the first information comprises a threshold set and position information of a cell reference point, and the threshold set comprises at least two thresholds; and
determining, by the terminal device based on the first information, whether the threshold set and a distance between the terminal device and the cell reference point satisfy a first event, wherein the first event is for cell mobility management of the terminal device.

2. The method according to claim 1, wherein the cell reference point comprises at least one of the following: a serving cell reference pointor a target cell reference point, and the method further comprises:
obtaining, by the terminal device, the first event, wherein the first event comprises at least one of the following:
a distance between the terminal device and the serving cell reference point is greater than at least one threshold in the threshold set; or
a distance between the terminal device and the target cell reference point is less than at least one threshold in the threshold set.

3. The method according to claim 1 or 2, wherein the threshold set comprises at least one of the following:
a longitude threshold and a latitude threshold;
thresholds corresponding to an x-axis, a y-axis, and a z-axis in an earth-centered, earth-fixed ECEF coordinate system;
thresholds corresponding to an x-axis, a y-axis, and a z-axis in an earth-centered-inertial ECI coordinate system; or
at least two of a first angle, a second angle, and a third angle.

4. The method according to any one of claims 1 to 3, wherein the method further comprises:
obtaining, by the terminal device, first position assistance information, wherein the first position assistance information comprises a position offset of the cell reference point relative to a network device, and threshold set information; and
obtaining, by the terminal device, ephemeris information; and
the obtaining, by a terminal device, first information comprises:
determining, by the terminal device, the first information based on the first position assistance information and the ephemeris information.

5. The method according to claim 4, wherein the first position assistance information comprises position offsets of a plurality of cell reference points relative to the network device, the position offsets comprise position offsets that are of a plurality of cell reference points on a first plane and that are relative to the network device, and the first plane comprises a plane perpendicular to a connection line between the network device and an earth center; and
the first position assistance information further comprises at least one of the following: a start point of the first plane, an angle between a first direction on the first plane and the connection line, an angle between a second direction on the first plane and the connection line, or a maximum off-axis angle, wherein the first direction is perpendicular to the second direction.

6. The method according to claim 4 or 5, wherein the first position assistance information further comprises status information of at least one of the position offset and the threshold set information, and the status information is used by the terminal device to determine whether the at least one of the position offset and the threshold set information is active.

7. The method according to any one of claims 4 to 6, wherein the method further comprises:
obtaining, by the terminal device, a first system information block SIB message, wherein the first SIB message comprises the first position assistance information and a first value tag; and
when values of the first value tag and a second value tag are different,
obtaining, by the terminal device, an updated first SIB message, wherein the updated first SIB message comprises second position assistance information, and the second value tag is a value tag comprised in the first SIB message before the first SIB message is updated.

8. The method according to claim 7, wherein the first SIB message further comprises a version number of the first SIB message, and the method further comprises:
obtaining, by the terminal device, a correspondence between the version number of the first SIB message and position assistance information, wherein the correspondence between the version number of the first SIB message and the position assistance information is used to determine the first information.

9. The method according to any one of claims 4 to 8, wherein the obtaining, by the terminal device, ephemeris information comprises:
obtaining, by the terminal device, a second SIB message, wherein the second SIB message comprises the ephemeris information and a version number of the second SIB message, there is a correspondence between the ephemeris information and the version number of the second SIB message, and the correspondence between the ephemeris information and the version number of the second SIB message is used to determine the first information.

10. A cell mobility management method, comprising:
sending, by a network device, first information, wherein the first information comprises a threshold set and position information of a cell reference point, the threshold set comprises at least two thresholds, the first information is used to determine whether the threshold set and a distance between a terminal device and the cell reference point satisfy a first event, and the first event is for cell mobility management of the terminal device.

11. The method according to claim 10, wherein the cell reference point comprises at least one of the following: a serving cell reference point and a target cell reference point, or the method further comprises:
sending, by the network device, the first event, wherein the first event comprises at least one of the following:
a distance between the terminal device and the serving cell reference point is greater than at least one threshold in the threshold set; or
a distance between the terminal device and the target cell reference point is less than at least one threshold in the threshold set.

12. The method according to claim 10 or 11, wherein the threshold set comprises at least one of the following:
a longitude threshold and a latitude threshold;
thresholds corresponding to an x-axis, a y-axis, and a z-axis in an earth-centered, earth-fixed ECEF coordinate system;
thresholds corresponding to an x-axis, a y-axis, and a z-axis in an earth-centered-inertial ECI coordinate system; or
at least two of a first angle, a second angle, and a third angle.

13. The method according to any one of claims 10 to 12, wherein the sending, by a network device, first information comprises:
sending, by the network device, first position assistance information, wherein the first position assistance information comprises a position offset of the cell reference point relative to the network device, and threshold set information; and
sending, by the network device, ephemeris information, wherein the ephemeris information and the first position assistance information are used to determine the first information.

14. The method according to claim 13, wherein the first position assistance information comprises position offsets of a plurality of cell reference points relative to the network device, the position offsets comprise position offsets that are of a plurality of cell reference points on a first plane and that are relative to the network device, and the first plane comprises a plane perpendicular to a connection line between the network device and an earth center; and
the first position assistance information further comprises at least one of the following: a start point of the first plane, an angle between a first direction on the first plane and the connection line, an angle between a second direction on the first plane and the connection line, or a maximum off-axis angle, wherein the first direction is perpendicular to the second direction.

15. The method according to claim 13 or 14, wherein the first position assistance information further comprises status information of at least one of the position offset and the threshold set information, and the status information is used by the terminal device to determine whether the at least one of the position offset and the threshold set information is active.

16. The method according to any one of claims 13 to 15, wherein the method further comprises:
sending, by the network device, a first system information block SIB message, wherein the first SIB message comprises the first position assistance information; and
when the first position assistance information changes,
sending, by the network device, an updated first SIB message, wherein the updated first SIB message comprises second position assistance information.

17. The method according to claim 16, wherein the first SIB message further comprises a version number of the first SIB message, there is a correspondence between the version number of the first SIB message and position assistance information, and the correspondence between the version number of the first SIB message and the position assistance information is used to determine the first information.

18. The method according to any one of claims 13 to 17, wherein the sending, by the network device, ephemeris information comprises:
sending, by the network device, a second SIB message, wherein the second SIB message comprises the ephemeris information and a version number of the second SIB message, there is a correspondence between the ephemeris information and the version number of the second SIB message, and the correspondence between the ephemeris information and the version number of the second SIB message is used to determine the first information.

19. A communication apparatus, comprising:
a transceiver unit, configured to obtain first information, wherein the first information comprises a threshold set and position information of a cell reference point, and the threshold set comprises at least two thresholds; and
a processing unit, configured to determine, based on the first information, whether the threshold set and a distance between a terminal device and the cell reference point satisfy a first event, wherein the first event is for cell mobility management of the terminal device.

20. The apparatus according to claim 19, wherein the cell reference point comprises at least one of the following: a serving cell reference point and a target cell reference point; or
the transceiver unit is further configured to obtain the first event, wherein the first event comprises at least one of the following:
a distance between the terminal device and the serving cell reference point is greater than at least one threshold in the threshold set; or
a distance between the terminal device and the target cell reference point is less than at least one threshold in the threshold set.

21. The apparatus according to claim 19 or 20, wherein the threshold set comprises at least one of the following:
a longitude threshold and a latitude threshold;
thresholds corresponding to an x-axis, a y-axis, and a z-axis in an earth-centered, earth-fixed ECEF coordinate system;
thresholds corresponding to an x-axis, a y-axis, and a z-axis in an earth-centered-inertial ECI coordinate system; or
at least two of a first angle, a second angle, and a third angle.

22. The apparatus according to any one of claims 19 to 21, wherein
the transceiver unit is further configured to obtain first position assistance information, wherein the first position assistance information comprises position offsets of one or more cell reference points relative to a network device, and threshold set information;
the transceiver unit is further configured to obtain ephemeris information; and
the processing unit is further configured to determine the first information based on the first position assistance information and the ephemeris information.

23. The apparatus according to claim 22, wherein the first position assistance information comprises position offsets of a plurality of cell reference points relative to the network device, the position offsets comprise position offsets that are of a plurality of cell reference points on a first plane and that are relative to the network device, and the first plane comprises a plane perpendicular to a connection line between the network device and an earth center; and
the first position assistance information further comprises at least one of the following: a start point of the first plane, an angle between a first direction on the first plane and the connection line, an angle between a second direction on the first plane and the connection line, or a maximum off-axis angle, wherein the first direction is perpendicular to the second direction.

24. The apparatus according to claim 22 or 23, wherein the first position assistance information further comprises status information of at least one of the position offset and the threshold set information, and the status information is used by the terminal device to determine whether the at least one of the position offset and the threshold set information is active.

25. The apparatus according to any one of claims 22 to 24, wherein
the transceiver unit is further configured to obtain a first system information block SIB message, wherein the first SIB message comprises the first position assistance information and a first value tag; and
when values of the first value tag and a second value tag are different,
the transceiver unit is further configured to obtain an updated first SIB message, wherein the updated first SIB message comprises second position assistance information, and the second value tag is a value tag comprised in the first SIB message before the first SIB message is updated.

26. The apparatus according to claim 25, wherein the first SIB message further comprises a version number of the first SIB message; and
the processing unit is configured to obtain a correspondence between the version number of the first SIB message and position assistance information, wherein the correspondence between the version number of the first SIB message and the position assistance information is used to determine the first information.

27. The apparatus according to any one of claims 22 to 26, wherein
the transceiver unit is further configured to obtain a second SIB message, wherein the second SIB message comprises the ephemeris information and a version number of the second SIB message, there is a correspondence between the ephemeris information and the version number of the second SIB message, and the correspondence between the ephemeris information and the version number of the second SIB message is used to determine the first information.

28. A communication apparatus, comprising:
a transceiver unit, configured to send first information, wherein the first information comprises a threshold set and position information of a cell reference point, the threshold set comprises at least two thresholds, the first information is used to determine whether the threshold set and a distance between a terminal device and the cell reference point satisfy a first event, and the first event is for cell mobility management of the terminal device.

29. The apparatus according to claim 28, wherein the cell reference point comprises at least one of the following: a serving cell reference point and a target cell reference point; or
the transceiver unit is further configured to send the first event, wherein the first event comprises at least one of the following:
a distance between the terminal device and the serving cell reference point is greater than at least one threshold in the threshold set; or
a distance between the terminal device and the target cell reference point is less than at least one threshold in the threshold set.

30. The apparatus according to claim 28 or 29, wherein the threshold set comprises at least one of the following:
a longitude threshold and a latitude threshold;
thresholds corresponding to an x-axis, a y-axis, and a z-axis in an earth-centered, earth-fixed ECEF coordinate system;
thresholds corresponding to an x-axis, a y-axis, and a z-axis in an earth-centered-inertial ECI coordinate system; or
at least two of a first angle, a second angle, and a third angle.

31. The apparatus according to any one of claims 28 to 30, wherein
the transceiver unit is further configured to send first position assistance information, wherein the first position assistance information comprises a position offset of the cell reference point relative to a network device, and threshold set information; and
the transceiver unit is further configured to send ephemeris information, wherein the ephemeris information and the first position assistance information are used to determine the first information.

32. The apparatus according to claim 31, wherein the first position assistance information comprises position offsets of a plurality of cell reference points relative to the network device, the position offsets comprise position offsets that are of a plurality of cell reference points on a first plane and that are relative to the network device, and the first plane comprises a plane perpendicular to a connection line between the network device and an earth center; and
the first position assistance information further comprises at least one of the following: a start point of the first plane, an angle between a first direction on the first plane and the connection line, an angle between a second direction on the first plane and the connection line, or a maximum off-axis angle, wherein the first direction is perpendicular to the second direction.

33. The apparatus according to claim 31 or 32, wherein the first position assistance information further comprises status information of at least one of the position offset or the threshold set information, and the status information is used by the terminal device to determine whether the at least one of the position offset or the threshold set information is active.

34. The apparatus according to any one of claims 31 to 33, wherein
the transceiver unit is further configured to send a first system information block SIB message, wherein the first SIB message comprises the first position assistance information; and
when the first position assistance information changes,
the transceiver unit is further configured to send an updated first SIB message, wherein the updated first SIB message comprises second position assistance information.

35. The apparatus according to claim 34, wherein the first SIB message further comprises a version number of the first SIB message, there is a correspondence between the version number of the first SIB message and position assistance information, and the correspondence between the version number of the first SIB message and the position assistance information is used to determine the first information.

36. The apparatus according to any one of claims 31 to 35, wherein
the transceiver unit is further configured to send a second SIB message, wherein the second SIB message comprises the ephemeris information and a version number of the second SIB message, there is a correspondence between the ephemeris information and the version number of the second SIB message, and the correspondence between the ephemeris information and the version number of the second SIB message is used to determine the first information.

37. A communication apparatus, wherein the apparatus comprises a processor, the processor is coupled to a memory, the memory stores instructions, and when the instructions are run by the processor,
the processor is enabled to perform the method according to any one of claims 1 to 9; or
the processor is enabled to perform the method according to any one of claims 10 to 18.

38. A communication apparatus, wherein the apparatus comprises a logic circuit and an input/output interface, the logic circuit is configured to be coupled to the input/output interface, and transmit data through the input/output interface, to perform the method according to any one of claims 1 to 9, or perform the method according to any one of claims 10 to 18.

39. A computer-readable storage medium, wherein the computer-readable storage medium is configured to store a computer program; and when the computer program runs on a computer, the computer is enabled to perform the method according to any one of claims 1 to 9, or the computer is enabled to perform the method according to any one of claims 10 to 18.

40. A computer program product, wherein the computer program product comprises computer program code; and when the computer program code is run, the method according to any one of claims 1 to 9 or the method according to any one of claims 10 to 18 is implemented.
